# EUROPEAN PATENT APPLICATION

(11) **EP 4 668 620 A1**
(43) Date of publication of application: **24.12.2025**
(21) Application number: 24756296.0
(22) Date of filing: 08.02.2024
(51) Int. Cl.: H04B 17/391

(54) **PERFORMANCE EVALUATION METHOD AND APPARATUS, AND TERMINAL AND NETWORK-SIDE DEVICE**

(30) Priority: 17.02.2023 CN 202310133220
(71) Applicant: Datang Mobile Communications Equipment Co., Ltd., Beijing 100085 (CN)
(72) Inventor: FEI, Yongqiang, Beijing 100085 (CN); WANG, Da, Beijing 100085 (CN); GAO, Qiubin, Beijing 100085 (CN)
(74) Representative: Ipsilon
(86) International application number: PCT/CN2024/076927
(87) International publication number: WO 2024/169924

(57) **Abstract**

Provided in the embodiments of the present disclosure are a performance evaluation method and apparatus, and a terminal and a network-side device. The performance evaluation method comprises: determining a model set or function set to be evaluated, wherein models or functions in said model set or function set are deployed in a terminal; performing a performance evaluation on the models or functions in said model set or function set, so as to obtain a performance evaluation result; and sending the performance evaluation result to a network side. By means of performing a performance evaluation on models or functions that are deployed in a terminal, a performance evaluation result is obtained to serve as a reference for determining a model or function suitable for an environment where the terminal is located, such that the communication performance of the terminal is improved.

## Description

### CROSS-REFERENCES TO RELATED APPLICATIONS

The present application claims priority to Chinese Patent Application No. 202310133220.0 filed on February 17, 2023, entitled "Performance Evaluation Method and Apparatus, and Terminal and Network-side Device", which is hereby incorporated by reference in its entirety.

### FIELD

The present application relates to the field of communications, and in particular to methods and apparatuses for performance evaluation, a terminal, and a network device.

### BACKGROUND

In a communication system, performance of an artificial intelligence (AI)/machine learning (ML) model or function may be monitored, that is, model or function monitoring. In case that the performance of a certain AI/ML model or function is poor, the AI/ML model or function may be retrained, or may be switched to another suitable AI/ML model or function, or a non-AI/ML manner may be used .

In the related art, in case of performing performance monitoring on a model or function currently activated by the terminal and determining whether the model or function currently activated by the terminal is available, a better model or function selection scheme cannot be provided for the terminal, and the communication performance of the terminal cannot be guaranteed

### BRIEF SUMMARY

Embodiments of the present application provide methods, apparatuses, terminals and network side devices for performance evaluation to improve the communication performance of the terminal.

An embodiment of the present application provides a method for performance evaluation, and the method includes:
determining a set of models or functions to be evaluated, where a model in the set of models or functions to be evaluated is deployed on the terminal, and a function in the set of models or functions to be evaluated is a function supported by the terminal;
performing a performance evaluation on the model or function in the set of models or functions to be evaluated to obtain a performance evaluation result; and
transmitting the performance evaluation result to a network side.

In an embodiment, according to the method for performance evaluation provided by an embodiment of the present application, performing the performance evaluation on the model or function in the set of models or functions to be evaluated to obtain the performance evaluation result includes any of following:
activating at least one model or function in the set of models or functions to be evaluated within a first time window, obtaining an output of the at least one model or function, and obtaining, based on the output of the at least one model or function, a performance evaluation result corresponding to the at least one model or function respectively;
obtaining the performance evaluation result based on an input distribution characteristic and/or an application condition corresponding to the model or function in the set of models or functions to be evaluated; or
determining, based on an input distribution characteristic and/or an application condition corresponding to the model or function in the set of models or functions to be evaluated, a subset of models or functions to be further evaluated from the set of models or functions to be evaluated, activating at least one model or function in the subset of models or functions within a first time window, obtaining an output of the at least one model or function, and obtaining the performance evaluation result based on the output of the at least one model or function.

In an embodiment, according to the method for performance evaluation provided by an embodiment of the present application, in case of obtaining the performance evaluation result based on the output of the at least one model or function, the performance evaluation result includes one of more of following:
the output of the at least one model or function;
an accuracy evaluation result of the output of the at least one model or function;
a system performance evaluation result after applying the output of the at least one model or function to a communication system;
output distribution characteristic information of the at least one model or function;
offset information of an output distribution characteristic, of the at least one model or function, relative to a reference output distribution characteristic;
a model or function that the terminal expects to activate, or a model or function that the terminal does not expect to activate, where the model or function that the terminal expects to activate or the model or function that the terminal does not expect to activate is determined based on the output of the at least one model or function; or
model or function management information of the terminal, where the model or function management information is used to represent that the terminal performs model or function management based on the output of the at least one model or function, and the model or function management includes at least one of following: model or function activation processing, model or function switching processing, model or function update processing, or fallback processing.

In an embodiment, according to the method for performance evaluation provided by an embodiment of the present application, in case of obtaining the performance evaluation result based on the input distribution characteristic and/or the application condition corresponding to the model or function in the set of models or functions to be evaluated, the performance evaluation result includes one of more of following:
an input corresponding to the model or function in the set of models or functions to be evaluated;
input distribution characteristic information corresponding to the model or function in the set of models or functions to be evaluated;
characteristic offset information of the input distribution characteristic, corresponding to the model or function in the set of models or functions to be evaluated, relative to a reference input distribution characteristic;
the application condition corresponding to the model or function in the set of models or functions to be evaluated;
information of applicability of the model or function, in the set of models or functions to be evaluated, to a condition where the terminal is located, where the information of applicability is determined based on the condition where the terminal is located and the application condition corresponding to the model or function;
a model or function that the terminal expects to activate, or a model or function that the terminal does not expect to activate, where the model or function that the terminal expects to activate or the model or function that the terminal does not expect to activate is determined based on an input distribution characteristic offset and/or the application condition corresponding to the model or function in the set of models or functions to be evaluated; or
model or function management information of the terminal, where the model or function management information is used to represent that the terminal performs model or function management based on the input distribution characteristic and/or the application condition corresponding to the model or function in the set of models or functions to be evaluated, and the model or function management includes at least one of following: model or function activation processing, model or function switching processing, model or function update processing, or fallback processing.

In an embodiment, according to the method for performance evaluation provided by an embodiment of the present application, the first time window is a continuous time window, or the first time window includes multiple non-overlapping sub-time windows.

In an embodiment, according to the method for performance evaluation provided by an embodiment of the present application, the first time window is a periodic time window or a time window triggered based on an indication from the network side.

In an embodiment, according to the method for performance evaluation provided by an embodiment of the present application, a length of the first time window is determined based on a predefined fixed duration, or determined based on configuration information or indication information from the network side, or determined by the terminal, or determined based on predefined first information;
where the first information includes one or more of following: a number of models or functions in the set of models or functions to be evaluated, a number of models or functions simultaneously activated by the terminal, a number of models or functions remaining activated, or a duration from activating any model or function in the set of models or functions to be evaluated to obtaining the output of the model or function.

In an embodiment, according to the method for performance evaluation provided by an embodiment of the present application, in case that the duration of the first time window is determined by the terminal, the method further includes:
transmitting first indication information to the network side, where the first indication information is used to indicate the duration of the first time window determined by the terminal.

In an embodiment, according to the method for performance evaluation provided by an embodiment of the present application, transmitting the performance evaluation result to the network side includes one or more of following:
transmitting a performance evaluation result corresponding to a model or function activated within the first time window after the first time window ends; or
transmitting a performance evaluation result corresponding to a model or function activated before the first time window within the first time window.

In an embodiment, according to the method for performance evaluation provided by an embodiment of the present application, the method further including one or more of following:
not transmitting, within the first time window, a performance evaluation result corresponding to a model or function activated within the first time window;
not expecting to transmit, within the first time window, a performance evaluation result corresponding to a model or function activated within the first time window; or
not expecting to transmit, within the first time window, a performance evaluation result.

In an embodiment, according to the method for performance evaluation provided by an embodiment of the present application, in case that the first time window includes multiple non-overlapping sub-time windows, transmitting the performance evaluation result to the network side includes one or more of following:
transmitting a performance evaluation result corresponding to a model or function activated within the sub-time window after each sub-time window ends;
transmitting performance evaluation results corresponding to models or functions activated within N sub-time windows after the N sub-time windows end, where N is a positive integer and less than a number of the multiple sub-time windows included in the first time window;
transmitting performance evaluation results corresponding to models or functions activated within multiple sub-time windows after all the multiple sub-time windows included in the first time window end.

In an embodiment, according to the method for performance evaluation provided by an embodiment of the present application, determining the set of models or functions to be evaluated includes:
determining the set of models or functions to be evaluated at least partly based on second indication information from the network side.

In an embodiment, according to the method for performance evaluation provided by an embodiment of the present application, the method further including:
transmitting third indication information to the network side, where the third indication information is used to indicate the set of models or functions to be evaluated determined by the terminal.

An embodiment of the present application provides a method for performance evaluation, and the method includes:
receiving a performance evaluation result transmitted from a terminal,
where the performance evaluation result is determined based on a performance evaluation on a model or function in a set of models or functions to be evaluated, and the model or function in the set of models or functions to be evaluated is deployed on the terminal.

In an embodiment, according to the method for performance evaluation provided by an embodiment of the present application, the method further including:
transmitting configuration information or indication information to the terminal, where the configuration information or indication information is used to configure a first time window.

In an embodiment, according to the method for performance evaluation provided by an embodiment of the present application, the method further including:
receiving first indication information transmitted from the terminal, where the first indication information is used to indicate a duration of a first time window determined by the terminal.

In an embodiment, according to the method for performance evaluation provided by an embodiment of the present application, the method further including:
transmitting second indication information to the terminal, where the second indication information is used to indicate the set of models or functions to be evaluated.

In an embodiment, according to the method for performance evaluation provided by an embodiment of the present application, the method further including:
receiving third indication information transmitted from the terminal, where the third indication information is used to indicate the set of models or functions to be evaluated determined by the terminal.

In an embodiment, according to the method for performance evaluation provided by an embodiment of the present application, receiving the performance evaluation result transmitted from the terminal includes:
receiving, after the first time window ends, a performance evaluation result corresponding to a model or function activated within the first time window; or
receiving, within the first time window, a performance evaluation result corresponding to a model or function activated before the first time window.

In an embodiment, according to the method for performance evaluation provided by an embodiment of the present application, the method further including one or more of following:
not receiving, within the first time window, a performance evaluation result corresponding to a model or function activated within the first time window;
not receiving the performance evaluation result within the first time window; or
not configuring or indicating the terminal to transmit the performance evaluation result within the first time window.

An embodiment of the present application provides a terminal, including: a memory, a transceiver, and a processor;
where the memory is used for storing a computer program; the transceiver is used for receiving and transmitting data under control of the processor; and the processor is used for reading the computer program in the memory and performing following operations:
determining a set of models or functions to be evaluated, where a model in the set of models or functions to be evaluated is deployed on the terminal, and a function in the set of models or functions to be evaluated is a function supported by the terminal;
performing a performance evaluation on the model or function in the set of models or functions to be evaluated to obtain a performance evaluation result; and
transmitting the performance evaluation result to a network side.

In an embodiment, according to the terminal provided by an embodiment of the present application, performing the performance evaluation on the model or function in the set of models or functions to be evaluated to obtain the performance evaluation result includes any of following:
activating at least one model or function in the set of models or functions to be evaluated within a first time window, obtaining an output of the at least one model or function, and obtaining, based on the output of the at least one model or function, a performance evaluation result corresponding to the at least one model or function respectively;
obtaining the performance evaluation result based on an input distribution characteristic and/or an application condition corresponding to the model or function in the set of models or functions to be evaluated; or
determining, based on an input distribution characteristic and/or an application condition corresponding to the model or function in the set of models or functions to be evaluated, a subset of models or functions to be further evaluated from the set of models or functions to be evaluated, activating at least one model or function in the subset of models or functions within a first time window, obtaining an output of the at least one model or function, and obtaining the performance evaluation result based on the output of the at least one model or function.

In an embodiment, according to the terminal provided by an embodiment of the present application, in case of obtaining the performance evaluation result based on the output of the at least one model or function, the performance evaluation result includes one of more of following:
the output of the at least one model or function;
an accuracy evaluation result of the output of the at least one model or function;
a system performance evaluation result after applying the output of the at least one model or function to a communication system;
output distribution characteristic information of the at least one model or function;
offset information of an output distribution characteristic, of the at least one model or function, relative to a reference output distribution characteristic;
a model or function that the terminal expects to activate, or a model or function that the terminal does not expect to activate, where the model or function that the terminal expects to activate or the model or function that the terminal does not expect to activate is determined based on the output of the at least one model or function; or
model or function management information of the terminal, where the model or function management information is used to represent that the terminal performs model or function management based on the output of the at least one model or function, and the model or function management includes at least one of following: model or function activation processing, model or function switching processing, model or function update processing, or fallback processing.

In an embodiment, according to the terminal provided by an embodiment of the present application, in case of obtaining the performance evaluation result based on the input distribution characteristic and/or the application condition corresponding to the model or function in the set of models or functions to be evaluated, the performance evaluation result includes one of more of following:
an input corresponding to the model or function in the set of models or functions to be evaluated;
input distribution characteristic information corresponding to the model or function in the set of models or functions to be evaluated;
characteristic offset information of the input distribution characteristic, corresponding to the model or function in the set of models or functions to be evaluated, relative to a reference input distribution characteristic;
the application condition corresponding to the model or function in the set of models or functions to be evaluated;
information of applicability of the model or function, in the set of models or functions to be evaluated, to a condition where the terminal is located, where the information of applicability is determined based on the condition where the terminal is located and the application condition corresponding to the model or function;
a model or function that the terminal expects to activate, or a model or function that the terminal does not expect to activate, where the model or function that the terminal expects to activate or the model or function that the terminal does not expect to activate is determined based on an input distribution characteristic offset and/or the application condition corresponding to the model or function in the set of models or functions to be evaluated; or
model or function management information of the terminal, where the model or function management information is used to represent that the terminal performs model or function management based on the input distribution characteristic and/or the application condition corresponding to the model or function in the set of models or functions to be evaluated, and the model or function management includes at least one of following: model or function activation processing, model or function switching processing, model or function update processing, or fallback processing.

In an embodiment, according to the terminal provided by an embodiment of the present application, the first time window is a continuous time window, or the first time window includes multiple non-overlapping sub-time windows.

In an embodiment, according to the terminal provided by an embodiment of the present application, the first time window is a periodic time window or a time window triggered based on an indication from the network side.

In an embodiment, according to the terminal provided by an embodiment of the present application, a length of the first time window is determined based on a predefined fixed duration, or determined based on configuration information or indication information from the network side, or determined by the terminal, or determined based on predefined first information;
where the first information includes one or more of following: a number of models or functions in the set of models or functions to be evaluated, a number of models or functions simultaneously activated by the terminal, a number of models or functions remaining activated, or a duration from activating any model or function in the set of models or functions to be evaluated to obtaining the output of the model or function.

In an embodiment, according to the terminal provided by an embodiment of the present application, in case that the duration of the first time window is determined by the terminal, the operation further includes:
transmitting first indication information to the network side, where the first indication information is used to indicate the duration of the first time window determined by the terminal.

In an embodiment, according to the terminal provided by an embodiment of the present application, transmitting the performance evaluation result to the network side includes one or more of following:
transmitting a performance evaluation result corresponding to a model or function activated within the first time window after the first time window ends; or
transmitting a performance evaluation result corresponding to a model or function activated before the first time window within the first time window.

In an embodiment, according to the terminal provided by an embodiment of the present application, the operation further including one or more of following:
not transmitting, within the first time window, a performance evaluation result corresponding to a model or function activated within the first time window;
not expecting to transmit, within the first time window, a performance evaluation result corresponding to a model or function activated within the first time window; or
not expecting to transmit, within the first time window, a performance evaluation result.

In an embodiment, according to the terminal provided by an embodiment of the present application, in case that the first time window includes multiple non-overlapping sub-time windows, transmitting the performance evaluation result to the network side includes one or more of following:
transmitting a performance evaluation result corresponding to a model or function activated within the sub-time window after each sub-time window ends;
transmitting performance evaluation results corresponding to models or functions activated within N sub-time windows after the N sub-time windows end, where N is a positive integer and less than a number of the multiple sub-time windows included in the first time window;
transmitting performance evaluation results corresponding to models or functions activated within multiple sub-time windows after all the multiple sub-time windows included in the first time window end.

In an embodiment, according to the terminal provided by an embodiment of the present application, determining the set of models or functions to be evaluated includes:
determining the set of models or functions to be evaluated at least partly based on second indication information from the network side.

In an embodiment, according to the terminal provided by an embodiment of the present application, the operation further including:
transmitting third indication information to the network side, where the third indication information is used to indicate the set of models or functions to be evaluated determined by the terminal.

An embodiment of the present application provides a network side device, including: a memory, a transceiver, and a processor;
where the memory is used for storing a computer program; the transceiver is used for receiving and transmitting data under control of the processor; and the processor is used for reading the computer program in the memory and performing the following operations:
receiving a performance evaluation result transmitted from a terminal,
where the performance evaluation result is determined based on a performance evaluation on a model or function in a set of models or functions to be evaluated, and the model or function in the set of models or functions to be evaluated is deployed on the terminal.

In an embodiment, according to the network side device provided by an embodiment of the present application, the operation further including:
transmitting configuration information or indication information to the terminal, where the configuration information or indication information is used to configure a first time window.

In an embodiment, according to the network side device provided by an embodiment of the present application, the operation further including:
receiving first indication information transmitted from the terminal, where the first indication information is used to indicate a duration of a first time window determined by the terminal.

In an embodiment, according to the network side device provided by an embodiment of the present application, the operation further including:
transmitting second indication information to the terminal, where the second indication information is used to indicate the set of models or functions to be evaluated.

In an embodiment, according to the network side device provided by an embodiment of the present application, the operation further including:
receiving third indication information transmitted from the terminal, where the third indication information is used to indicate the set of models or functions to be evaluated determined by the terminal.

In an embodiment, according to the network side device provided by an embodiment of the present application, receiving the performance evaluation result transmitted from the terminal includes:
receiving, after the first time window ends, a performance evaluation result corresponding to a model or function activated within the first time window; or
receiving, within the first time window, a performance evaluation result corresponding to a model or function activated before the first time window.

In an embodiment, according to the network side device provided by an embodiment of the present application, the operation further includes one or more of following:
not receiving, within the first time window, a performance evaluation result corresponding to a model or function activated within the first time window;
not receiving the performance evaluation result within the first time window; or
not configuring or indicating the terminal to transmit the performance evaluation result within the first time window.

An embodiment of the present application provides an apparatus for performance evaluation, and the apparatus includes:
a determining module, used for determining a set of models or functions to be evaluated, where a model in the set of models or functions to be evaluated is deployed on the terminal, and a function in the set of models or functions to be evaluated is a function supported by the terminal;
an evaluating module, used for performing a performance evaluation on the model or function in the set of models or functions to be evaluated to obtain a performance evaluation result; and
a transmitting module, used for transmitting the performance evaluation result to a network side.

In an embodiment, according to the apparatus for performance evaluation provided by an embodiment of the present application, the evaluating module is used for any of the following:
activating at least one model or function in the set of models or functions to be evaluated within a first time window, obtaining an output of the at least one model or function, and obtaining, based on the output of the at least one model or function, a performance evaluation result corresponding to the at least one model or function respectively;
obtaining the performance evaluation result based on an input distribution characteristic and/or an application condition corresponding to the model or function in the set of models or functions to be evaluated; or
determining, based on an input distribution characteristic and/or an application condition corresponding to the model or function in the set of models or functions to be evaluated, a subset of models or functions to be further evaluated from the set of models or functions to be evaluated, activating at least one model or function in the subset of models or functions within a first time window, obtaining an output of the at least one model or function, and obtaining the performance evaluation result based on the output of the at least one model or function.

In an embodiment, according to the apparatus for performance evaluation provided by an embodiment of the present application, in case of obtaining the performance evaluation result based on the output of the at least one model or function, the performance evaluation result includes one of more of following:
the output of the at least one model or function;
an accuracy evaluation result of the output of the at least one model or function;
a system performance evaluation result after applying the output of the at least one model or function to a communication system;
output distribution characteristic information of the at least one model or function;
offset information of an output distribution characteristic, of the at least one model or function, relative to a reference output distribution characteristic;
a model or function that the terminal expects to activate, or a model or function that the terminal does not expect to activate, where the model or function that the terminal expects to activate or the model or function that the terminal does not expect to activate is determined based on the output of the at least one model or function; or
model or function management information of the terminal, where the model or function management information is used to represent that the terminal performs model or function management based on the output of the at least one model or function, and the model or function management includes at least one of following: model or function activation processing, model or function switching processing, model or function update processing, or fallback processing.

In an embodiment, according to the apparatus for performance evaluation provided by an embodiment of the present application, in case of obtaining the performance evaluation result based on the input distribution characteristic and/or the application condition corresponding to the model or function in the set of models or functions to be evaluated, the performance evaluation result includes one of more of following:
an input corresponding to the model or function in the set of models or functions to be evaluated;
input distribution characteristic information corresponding to the model or function in the set of models or functions to be evaluated;
characteristic offset information of the input distribution characteristic, corresponding to the model or function in the set of models or functions to be evaluated, relative to a reference input distribution characteristic;
the application condition corresponding to the model or function in the set of models or functions to be evaluated;
information of applicability of the model or function, in the set of models or functions to be evaluated, to a condition where the terminal is located, where the information of applicability is determined based on the condition where the terminal is located and the application condition corresponding to the model or function;
a model or function that the terminal expects to activate, or a model or function that the terminal does not expect to activate, where the model or function that the terminal expects to activate or the model or function that the terminal does not expect to activate is determined based on an input distribution characteristic offset and/or the application condition corresponding to the model or function in the set of models or functions to be evaluated; or
model or function management information of the terminal, where the model or function management information is used to represent that the terminal performs model or function management based on the input distribution characteristic and/or the application condition corresponding to the model or function in the set of models or functions to be evaluated, and the model or function management includes at least one of following: model or function activation processing, model or function switching processing, model or function update processing, or fallback processing.

In an embodiment, according to the apparatus for performance evaluation provided by an embodiment of the present application, the first time window is a continuous time window, or the first time window includes multiple non-overlapping sub-time windows.

In an embodiment, according to the apparatus for performance evaluation provided by an embodiment of the present application, the first time window is a periodic time window or a time window triggered based on an indication from the network side.

In an embodiment, according to the apparatus for performance evaluation provided by an embodiment of the present application, a length of the first time window is determined based on a predefined fixed duration, or determined based on configuration information or indication information from the network side, or determined by the terminal, or determined based on predefined first information;
where the first information includes one or more of following: a number of models or functions in the set of models or functions to be evaluated, a number of models or functions simultaneously activated by the terminal, a number of models or functions remaining activated, or a duration from activating any model or function in the set of models or functions to be evaluated to obtaining the output of the model or function.

In an embodiment, according to the apparatus for performance evaluation provided by an embodiment of the present application, in case that the duration of the first time window is determined by the terminal, the apparatus further includes:
a first indication information transmitting module, used for transmitting first indication information to the network side, where the first indication information is used to indicate the duration of the first time window determined by the terminal.

In an embodiment, according to the apparatus for performance evaluation provided by an embodiment of the present application, the transmitting module is used for one or more of following:
transmitting a performance evaluation result corresponding to a model or function activated within the first time window after the first time window ends; or
transmitting a performance evaluation result corresponding to a model or function activated before the first time window within the first time window.

In an embodiment, according to the apparatus for performance evaluation provided by an embodiment of the present application, further including a result transmitting module used for one or more of following:
not transmitting, within the first time window, a performance evaluation result corresponding to a model or function activated within the first time window;
not expecting to transmit, within the first time window, a performance evaluation result corresponding to a model or function activated within the first time window; or
not expecting to transmit, within the first time window, a performance evaluation result.

In an embodiment, according to the apparatus for performance evaluation provided by an embodiment of the present application, the transmitting module is used for one or more of following:
in case that the first time window includes multiple non-overlapping sub-time windows, transmitting a performance evaluation result corresponding to a model or function activated within the sub-time window after each sub-time window ends;
transmitting performance evaluation results corresponding to models or functions activated within N sub-time windows after the N sub-time windows end, where N is a positive integer and less than a number of the multiple sub-time windows included in the first time window;
transmitting performance evaluation results corresponding to models or functions activated within multiple sub-time windows after all the multiple sub-time windows included in the first time window end.

In an embodiment, according to the apparatus for performance evaluation provided by an embodiment of the present application, the determining module is used for:
determining the set of models or functions to be evaluated at least partly based on second indication information from the network side.

In an embodiment, according to the apparatus for performance evaluation provided by an embodiment of the present application, the apparatus further including:
a third indication information transmitting module, used for transmitting third indication information to the network side, where the third indication information is used to indicate the set of models or functions to be evaluated determined by the terminal.

An embodiment of the present application provides a apparatus for performance evaluation, including:
a receiving module, used for receiving a performance evaluation result transmitted from a terminal,
where the performance evaluation result is determined based on a performance evaluation on a model or function in a set of models or functions to be evaluated, and the model or function in the set of models or functions to be evaluated is deployed on the terminal.

In an embodiment, according to the apparatus for performance evaluation provided by an embodiment of the present application, the apparatus further including:
an information transmitting module, used for transmitting configuration information or indication information to the terminal, where the configuration information or indication information is used to configure a first time window.

In an embodiment, according to the apparatus for performance evaluation provided by an embodiment of the present application, the apparatus further including:
a first indication information receiving module, used for receiving first indication information transmitted from the terminal, where the first indication information is used to indicate a duration of a first time window determined by the terminal.

In an embodiment, according to the apparatus for performance evaluation provided by an embodiment of the present application, the apparatus further including:
a second indication information transmitting module, used for transmitting second indication information to the terminal, where the second indication information is used to indicate the set of models or functions to be evaluated.

In an embodiment, according to the apparatus for performance evaluation provided by an embodiment of the present application, the apparatus further including:
a third indication information receiving module, used for receiving third indication information transmitted from the terminal, where the third indication information is used to indicate the set of models or functions to be evaluated determined by the terminal.

In an embodiment, according to the apparatus for performance evaluation provided by an embodiment of the present application, the receiving module is used for:
receiving, after the first time window ends, a performance evaluation result corresponding to a model or function activated within the first time window; or
receiving, within the first time window, a performance evaluation result corresponding to a model or function activated before the first time window.

In an embodiment, according to the apparatus for performance evaluation provided by an embodiment of the present application, the apparatus further includes a result receiving module used for one or more of following:
not receiving, within the first time window, a performance evaluation result corresponding to a model or function activated within the first time window;
not receiving the performance evaluation result within the first time window; or
not configuring or indicating the terminal to transmit the performance evaluation result within the first time window.

An embodiment of the present application provides a processor-readable storage medium storing a computer program, and the computer program is used for causing a processor to perform any of the method for performance evaluation provided by the above embodiments of the present application.

An embodiment of the present application provides a computer-readable storage medium storing a computer program, and the computer program is used for causing a computer to perform any of the method for performance evaluation provided by the above embodiments of the present application.

According to the methods, apparatuses, terminals and network side devices for performance evaluation provided in the embodiments of the present application, the performance evaluation result is obtained by evaluating the performance of the model or function deployed on the terminal, and the performance evaluation result serves as a basis for determining a model or function applicable for the environment where the terminal is located, thereby improving the communication performance of the terminal.

### BRIEF DESCRIPTION OF THE DRAWINGS

To clearly illustrate the solutions in the embodiments of the present application, the drawings used in the description of the embodiments are briefly described below. The drawings in the following description are only some embodiments of the present application, and other drawings may be obtained according to these drawings without any creative effort for those skilled in the art.
FIG. 1 is a schematic flowchart of a method for performance evaluation according to an embodiment of the present application;
FIG. 2 is a schematic diagram of an application scenario according to an embodiment of the present application;
FIG. 3 is a first schematic diagram of a first time window according to an embodiment of the present application;
FIG. 4 is a second schematic diagram of a first time window according to an embodiment of the present application;
FIG. 5 is a third schematic diagram of a first time window according to an embodiment of the present application;
FIG. 6 is a schematic flowchart of a method for performance evaluation according to an embodiment of the present application;
FIG. 7 is a schematic diagram of a model or function evaluation according to an embodiment of the present application;
FIG. 8 is a schematic structural diagram of a terminal according to an embodiment of the present application;
FIG. 9 is a schematic structural diagram of a network side device according to an embodiment of the present application;
FIG. 10 is a schematic structural diagram of an apparatus for performance evaluation according to an embodiment of the present application; and
FIG. 11 is a schematic structural diagram of an apparatus for performance evaluation according to an embodiment of the present application.

### DETAILED DESCRIPTION

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that the associated objects have an "or" relationship.

In the embodiments of the present application, the term "multiple" refers to two or more than two, and other quantifiers are similar to it.

The solutions in embodiments of the present application are clearly and completely described in the following with reference to the accompanying drawings in the embodiments of the present application. These embodiments are only a part of the embodiments of the present application, and not all of the embodiments. All other embodiments obtained by those skilled in the art based on the embodiments of the present application without any creative effort belong to the scope of the present application.

The solutions according to the embodiments of the present application may be applicable to various systems, especially 5G system. For example, the applicable systems may be a global system of mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These various systems include a terminal device and a network device, and may further include a core network part, such as an evolved packet system (EPS), a 5G system (5GS), and the like.

The following is first described.

With the development of artificial intelligence (AI) and machine learning (ML), AI/ML models or functions are used to improve the performance of communication systems. AI/ML models or functions may be single-sided models or functions, that is, models or functions are only deployed on one side, such as the network (NW) side or the user equipment (UE) side; or double-sided models or functions, that is, models or functions are deployed on both the NW and UE sides, and the two sides collaborate to perform complete inference operations.

The single-sided models or functions deployed on the UE side, or the part belonging to the UE side in the double-sided models or functions, may be privately trained by UE manufacturers, chip manufacturers, or third-party service providers, and are originally unknown to the NW. In order to enable collaboration between the UE and the NW on AI models or functions and allow network devices to perform life cycle management (LCM) on the private models or functions of the UE, the UE or a third-party server may:
(1) transmit associated information of the AI/ML model or function to the NW for model or function identification, in which way the NW may know which AI/ML models or functions the UE has; and
(2) report to the NW that it has AI/ML function in certain aspects for functional identification, in which way the NW cannot know which AI/ML models or functions the UE has.

AI/ML models or functions are obtained through training with training data, reflecting the inherent relationship between input and output learned from the training data. However, the radio communication environment is often changing. In case that the characteristics of the training data of the AI/ML model or function deviate greatly from the characteristics of the current environment, the inherent relationship between input and output learned by the AI/ML model or function may no longer hold in the current environment, and the performance of the AI/ML model or function will decline.

Therefore, in communication systems, the performance of AI/ML models or functions may be monitored.

Model or function monitoring methods may include but are not limited to following cases.

### (1) Model or function monitoring according to the accuracy of the inference result of the model or function

For example, an AI/ML model or function is used for UE positioning. The input of the model or function is a channel impulse response (CIR), and the output obtained by the model or function inference is the position of the UE. Then, the performance of the AI/ML model or function may be monitored based on the deviation between the position inferred by the AI/ML model or function and the actual position of the UE.

### (2) Model or function monitoring based on the system performance after applying the inference result of the model or function to the communication system

For example, an AI/ML model or function is used for channel compression and decompression. The model or function is a double-sided model or function deployed on the UE and NW. The input of the model or function is an original channel, and a recovered channel is obtained through inference (compression-decompression) of the AI/ML model or function. The communication system uses the channel inferred by the AI/ML model or function for signal processing, such as channel equalization and demodulation, and counts the performance indicators of the communication system after using the inference result of the AI/ML model or function, such as block error rate (BLER), throughput, etc., to monitor the performance of the AI/ML model or function inference.

### (3) Model or function monitoring based on whether the input characteristic of the model or function is of offset, or the degree of offset of the model or function

For example, an AI/ML model or function is used for UE positioning, and the input of the model or function is a CIR. Certain characteristics of channels in different radio environments (such as multipath delay spread, Doppler frequency offset, etc.) are often different. By comparing the input (radio channel CIR) used during the training of the AI/ML model or function with the characteristics of the currently measured radio channel CIR, evaluating and measuring the offset between them, the suitability of the AI/ML model or function in the current radio environment may be estimated.

### (4) Model or function monitoring based on whether the output characteristic of the model or function is of offset, or the degree of offset of the model or function

Similar to the above method, the output obtained through the inference of the AI/ML model or function also has certain distribution characteristics. By comparing the output of the AI/ML model or function during training with the output of the AI/ML model or function in the current environment and obtaining the characteristic offset between them, the performance of the AI/ML model or function may be evaluated.

### (5) Model or function monitoring based on the application conditions of the model or function

For example, an AI/ML model or function is used for beam management, and the training data used during the training of the model or function is collected from the outdoor macro station environment. Then one of the optimal application conditions of the AI/ML model or function should be the outdoor macro station environment. In case that the current environment is not an outdoor macro station environment but an indoor small station environment, it may be estimated that the performance of the AI/ML model or function will decrease at this time or even no longer applicable.

However, since the UE may store multiple AI/ML models or functions to cope with different radio environments. Although the performance of an AI/ML model or function in the current environment may be evaluated through the above AI/ML model or function evaluation method, even if it is determined that the currently activated and used AI/ML model or function is no longer applicable, it is impossible to determine which AI/ML model or function should be used at this time. It may only retrain the model or function or no longer use the AI/ML method.

The embodiments of the present application provide methods and apparatuses for performance evaluation, a terminal, and a network device, to improve the communication performance of the terminal.

The methods and the apparatuses are based on the same concept. Since the principles for solving problems by the method and the apparatus are similar, the implementations of the apparatus and the method may refer to each other, and repetitive parts are not repeated.

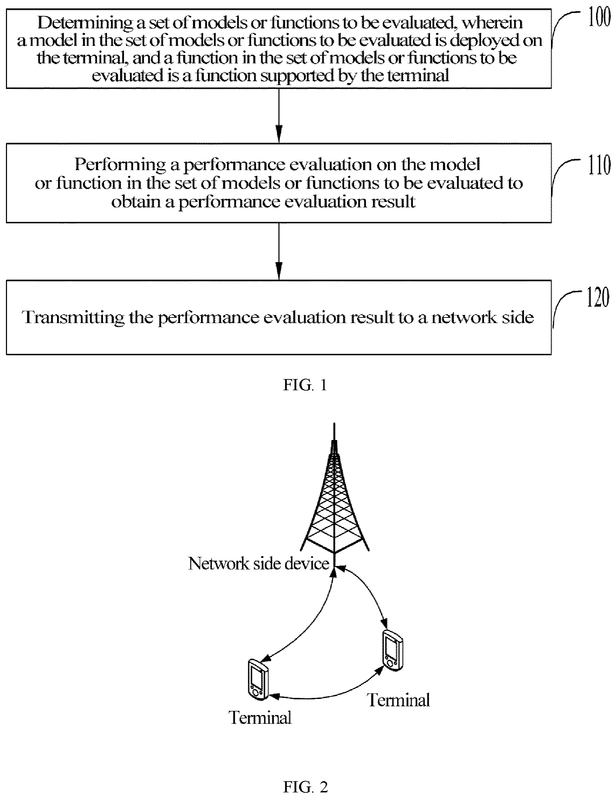

FIG. 1 is a schematic flowchart of a method for performance evaluation according to an embodiment of the present application. As shown in FIG. 1, an execution subject of the method includes a terminal, such as a user equipment (UE) or a mobile phone. The method includes following steps.

Step 100: determining a set of models or functions to be evaluated, where a model in the set of models or functions to be evaluated is deployed on the terminal, and a function in the set of models or functions to be evaluated is a function supported by the terminal.

The method for performance evaluation according to the embodiments of the present application monitors or evaluates a single-sided AI/ML model or function deployed on the UE side, or monitors or evaluates a part deployed on the UE side in a double-sided AI/ML model or function. Each embodiment of the present application monitors the AI/ML model or function on the UE side.

In an embodiment, the model or function includes the AI/ML model or function, or other model or function which implements a similar inference function. In each embodiment of the present application, the AI/ML model or function is interpreted as an example of the model or function, but not as a limitation on the model or function, which is not limited in the embodiments of the present application.

In an embodiment, the set of models or functions to be evaluated is an entire set of all models or functions deployed on the terminal, or a subset of the entire set of all models or functions deployed on the terminal.

In an embodiment, the set of models or functions to be evaluated includes one model or function, or includes two models or functions, or includes P models or functions, where P is an integer greater than or equal to 1 and less than a number of all models or functions deployed on the terminal.

In an embodiment, the model or function to be evaluated includes a currently activated AI/ML model or function.

In an embodiment, the model or function to be evaluated must include the currently activated AI/ML model or function, for example, the performance of currently activated AI/ML model or function is always monitored.

In an embodiment, the model or function to be evaluated does not include the currently activated AI/ML model or function.

In an embodiment, the model or function to be evaluated must not include the currently activated AI/ML model or function, for example, the performance of a currently inactivated AI/ML model or function is always monitored.

In an embodiment, the model or function to be evaluated must include the currently activated AI/ML model or function and must include at least one currently inactivated AI/ML model or function to ensure that the performance of the activated AI/ML model or function and the performance of the inactivated AI/ML model or function are always compared to allow the UE or NW to determine whether to switch the AI/ML model or function.

Step 110: performing a performance evaluation on the model or function in the set of models or functions to be evaluated to obtain a performance evaluation result.

Step 120: transmitting the performance evaluation result to a network side.

In an embodiment, the terminal feeds back the result to the network side after the performance evaluation.

In an embodiment, a time interval, between the time of the feedback for the terminal and the time of the performance evaluation, is configured or indicated by the network side, or is predefined.

In an embodiment, the performance evaluation result includes the performance of the corresponding model or function in the environment where the terminal is located.

In an embodiment, the performance evaluation result serves as a basis for determining a model or function, from the set of models or functions, applicable for the environment where the terminal is located.

In an embodiment, after the terminal determines the set of models or functions to be evaluated, the performance evaluation on the model or function in the set of models or functions to be evaluated is performed to obtain the performance evaluation result, which is used to reflect the performance of the model or function in the environment where the terminal is located, to provide a reference basis for selecting a model or function applicable for the environment where the terminal is located, and to avoid a defect in the related art that only whether the currently activated model or function of the terminal is available is determined. In the embodiment of the present application, not only whether the currently activated model or function of the terminal is available is determined, a model or function further applicable to the environment where the terminal is located is also selected to improve the communication performance of the terminal.

In an embodiment, the embodiment of the present application is applied to a communication system including a network-side device and a terminal device, or applied to a communication system including at least one terminal device; or applied to a communication system including at least one other communication device similar to the terminal device, or applied to a communication system including at least one other communication device deployed with the AI/ML model or function, which is not limited in the embodiment of the present application.

In an embodiment, the terminal referred to in the embodiment of the present application may be directly replaced to any device deployed with the AI/ML model or function, which is not limited in the embodiment of the present application.

In an embodiment, the network side includes the network side device, such as a base station, a gNB, etc., which is not limited in the embodiment of the present application.

FIG. 2 is a schematic diagram of an application scenario according to an embodiment of the present application. As shown in FIG. 2, multiple UEs including a UE1 and a UE2 apply for a network connection service, the gNB performs radio service for the UEs, and data interaction and transmission are performed between the gNB and UE1 and UE2 through radio communication.

The embodiment of the present application is applied to the communication system with the AI/ML model or function deployed on the UE side, for example, the embodiment of the present application is applied to a 5G NR system. It should be noted that the application scenario given in FIG. 2 only serves as an example of an implementable embodiment of the embodiments of the present application, and does not serve as a limitation of the application scenarios of the embodiments of the present application.

According to the method for performance evaluation provided in the embodiments of the present application, the performance evaluation result is obtained by evaluating the performance of the model or function deployed on the terminal, and the performance evaluation result serves as a basis for determining a model or function applicable for the environment where the terminal is located, thereby improving the communication performance of the terminal.

In an embodiment, performing the performance evaluation on the model or function in the set of models or functions to be evaluated to obtain the performance evaluation result includes any of following:
activating at least one model or function in the set of models or functions to be evaluated within a first time window, obtaining an output of the at least one model or function, and obtaining, based on the output of the at least one model or function, a performance evaluation result corresponding to the at least one model or function respectively;
obtaining the performance evaluation result based on an input distribution characteristic and/or an application condition corresponding to the model or function in the set of models or functions to be evaluated; or
determining, based on an input distribution characteristic and/or an application condition corresponding to the model or function in the set of models or functions to be evaluated, a subset of models or functions to be further evaluated from the set of models or functions to be evaluated, activating at least one model or function in the subset of models or functions within a first time window, obtaining an output of the at least one model or function, and obtaining the performance evaluation result based on the output of the at least one model or function.

In an embodiment, in case of monitoring or evaluating the model or function in the set of models or functions to be evaluated, following three methods may be included.

Method 1: activating at least one model or function in the set of models or functions to be evaluated within the first time window, and evaluating or monitoring the least one model or function.

Method 2: evaluating or monitoring the model or function in the set of models or functions to be evaluated based on the input distribution characteristic and/or application condition corresponding to the model or function in the set of models or functions to be evaluated, without the first time window.

Method 3: preliminary evaluating or monitoring the model or function in the set of models or functions to be evaluated based on the input distribution characteristic and/or application condition corresponding to the model or function in the set of models or functions to be evaluated, to obtain the model or function that may be further evaluated or monitored (a subset of the models or functions), and then activating at least one model or function in the set of models or functions to be evaluated within the first time window and evaluating or monitoring the least one model or function.

In an embodiment, in case that the terminal activates at least one model or function within the first time window, it may activate at least one model or function to be evaluated in turn and use the activated model or function for inference, where the order in which the terminal activates the at least one model or function to be evaluated may be determined by the terminal itself. The terminal may inform the network side or not inform the network side, or the order may be indicated by the network side.

In an embodiment, activating at least one model or function in the set of models or functions to be evaluated, or activating at least one model or function in the subset of models or functions, within the first time window may be using the activated at least one model or function for inference, and performing evaluation or monitoring based on the inference result.

In an embodiment, in case of activating at least one model or function in the set of models or functions to be evaluated, or activating at least one model or function in the subset of models or functions, within the first time window, using the activated at least one model or function for inference, and performing evaluation or monitoring based on the inference result, the evaluation or monitoring of the model or function may be performed based on one or more of following:
an accuracy of the inference result of the model or function;
a system performance after applying the inference result of the model or function to the communication system; or
whether an output characteristic is offset, or the degree of offset.

In an embodiment, the output of the model or function may include the inference result of the model or function.

In an embodiment, the use of Method 1, Method 2, or Method 3 for monitoring models or functions in the embodiments of the present application may be predefined or configured by the base station.

For example, the base station may configure the UE to use one of Method 1, Method 2, or Method 3 through radio resource control (RRC) signaling.

In an embodiment, in case of using Method 2 for model or function evaluation, the terminal does not need to activate the AI/ML model or function to be evaluated. Since the AI/ML model or function to be evaluated does not need to be activated in turn, the UE may complete the evaluation within a very short time, and the first time window may not need to be configured.

In an embodiment, the input distribution characteristic may include any signal or channel involved in the communication process, any parameter representing the signal, channel, transmission quality, etc. involved in the communication process, or part or all of the model or function information, which is not limited in the embodiments of the present application.

In an embodiment, the terminal may evaluate and measure the offset between characteristics by comparing the input distribution characteristic used in training a certain model or function (such as the Doppler delay spread of a signal) with the same type of characteristic of the currently measured radio channel, to evaluate the performance of the model or function. In case that the offset is less than a certain threshold, it is estimated that the performance of the model or function is good, and in case that the offset exceeds the certain threshold, it is estimated that the model or function is no longer applicable to the current environment.

In an embodiment, in case of evaluating the performance of the model or function based on the offset, the threshold of the offset may be configured or indicated by the network side, determined by the terminal itself, or predefined.

In an embodiment, for AI/ML models or functions with different functions, the input distribution characteristics and/or application conditions that need to be monitored may be different.

For example, the AI/ML model or function used for beam management may need to monitor the RSRP distribution of each beam;

For example, the AI/ML model or function used for positioning may need to monitor the strength and time of the main path or secondary path of the channel impulse response.

In an embodiment, the characteristics that a model or function needs to monitor are part of the model or function information. The application condition of a model or function may be provided or indicated by the trainer, provider, or transmitter of the model or function.

In an embodiment, the application condition of the model or function may be configured or indicated by the network side, or determined by the terminal itself.

For example, the performance of the AI/ML model or function may be evaluated by comparing the application condition of a certain AI/ML model or function with the condition of the current environment. In case that the application condition of the AI/ML model or function is the same as or similar to the condition of the current environment, such as both being outdoor scenarios, both being scenarios with dense obstacles, or both being high-speed moving scenarios, etc., it is estimated that the performance of the AI/ML model or function is good. Conversely, in case that the application condition of the AI/ML model or function is opposite to or significantly different from the condition of the current environment, such as one application condition being outdoor and the other being indoor, one application condition being dense obstacles and the other being sparse obstacles, one application condition being high-speed movement and the other being low-speed movement, it may be estimated that the performance of the AI/ML model or function is poor.

In an embodiment, in case of using Method 3 for monitoring or evaluation, it is divided into following two steps:
(1) for the set of models or functions to be evaluated, evaluating the performance of M models or functions therein through Method 2, and determining a subset of models or functions including M' models or functions from the set of models or functions to be evaluated; and
(2) for the subset of models or functions, evaluating the performance of the M' AI/ML models or functions through Method 1.

Determining the subset of models or functions from the set of models or functions to be evaluated may preliminarily screen out the models or functions that may be applicable to the current environmental condition, and reduce the number of models or functions that need to be evaluated through Method 1. The specific determination method may be as following.

In case that the performance evaluation result obtained through Method 2 is lower than a specific threshold or falls within a specific interval, it is considered that further evaluation using Method 1 may be performed.

For example, in case that the offset between the characteristic distribution of the input in the current environment and the characteristic distribution of the input during the training of the model or function is less than a certain threshold, or the characteristic distribution of the input in the current environment falls within a specific interval (where the interval may be the interval determined by the characteristic distribution of the input during the training of the AI/ML model or function), then the preliminary performance evaluation result is: applicable to the current environment.

In an embodiment, other methods that may be used to roughly evaluate the performance of the AI/ML model or function and determine potential applicability of the AI/ML model or function to the current environmental condition by "estimating the performance of AI/ML models or functions without AI/ML model or function inference" are also applicable to the embodiments of the present application.

In an embodiment, in case of obtaining the performance evaluation result based on the output of the at least one model or function, the performance evaluation result includes one of more of following:
the output of the at least one model or function;
an accuracy evaluation result of the output of the at least one model or function;
a system performance evaluation result after applying the output of the at least one model or function to a communication system;
output distribution characteristic information of the at least one model or function;
offset information of an output distribution characteristic, of the at least one model or function, relative to a reference output distribution characteristic;
a model or function that the terminal expects to activate, or a model or function that the terminal does not expect to activate, where the model or function that the terminal expects to activate or the model or function that the terminal does not expect to activate is determined based on the output of the at least one model or function; or
model or function management information of the terminal, where the model or function management information is used to represent that the terminal performs model or function management based on the output of the at least one model or function, and the model or function management includes at least one of following: model or function activation processing, model or function switching processing, model or function update processing, or fallback processing.

In an embodiment, the model or function that the terminal expects to activate may be one or more models or functions.

In an embodiment, the model or function that the terminal does not expect to activate may be one or more models or functions.

In an embodiment, model or function management may correspond to a minimum execution period T or interval G. For example, model or function management operations are performed only at the 100th, 200th, 300th... slot after obtaining all or part of the performance evaluation results, that is, the period T or interval G is 100 slots; the UE may feedback model or function management information at the 164th slot and perform model or function management at the 200th slot.

In an embodiment, model or function management may correspond to a minimum execution period T or interval G. For example, model or function management operations are performed only at the 100th, 200th, 300th... slot after obtaining all or part of the performance evaluation results, that is, the period T or interval G is 100 slots; the UE may perform model or function management at the 164th slot and feedback model or function management information after completing the execution process of model or function management.

In an embodiment, the terminal may feedback the performance evaluation result to the network side. In case of using Method 1 or Method 3, the performance evaluation result fed back from the terminal to the network side may include one or more of following.
(1) The output of the at least one model or function

For example, it may be the inference result of the AI/ML model or function to be evaluated, which may be used by the network side to perform performance monitoring and subsequent decision-making.

(2) The accuracy evaluation result of the output of the at least one model or function

For example, it may be the measurement result (measurement of accuracy) of the inference result of the AI/ML model or function to be evaluated, which may be used by the terminal to perform performance monitoring and subsequent decision-making based on the accuracy evaluation result of the output of the at least one model or function.

(3) The system performance evaluation result after applying the output of the at least one model or function to a communication system

For example, it may be the measurement result (measurement of system performance) of the inference result of the AI/ML model or function to be evaluated.

In an embodiment, the system performance may be, for example, bit error rate, block error rate, throughput, etc.

(4) The output distribution characteristic information of the at least one model or function

For example, it may be the distribution characteristic of the output of the AI/ML model or function to be evaluated, such as the distribution area of an output positioning position.

(5) The offset information of the output distribution characteristic, of the at least one model or function, relative to the reference output distribution characteristic

For example, it may be the offset of the output distribution characteristic of the AI/ML model or function to be evaluated compared with the reference output distribution characteristic, such as a coordinate offset of the output positioning position relative to a reference position.

(6) Suggestion information proposed by the terminal to the network device based on the inference result of the model or function to be evaluated

For example, the terminal suggests the NW to activate another model or function, based on the accuracy of the inference result of the AI/ML model or function or the system performance after applying the inference result of the AI/ML model or function to the communication system, or provides ranking information of the AI/ML models or functions to be evaluated in descending order of preference.

In an embodiment, the suggestion information may be used for performance monitoring on the UE side and subsequent decision-making on the NW side.
(7) The model or function that the terminal expects to activate, or the model or function that the terminal does not expect to activate, where the model or function that the terminal expects to activate or the model or function that the terminal does not expect to activate is determined based on the output of the at least one model or function, such as whether to activate other AI/ML models or functions, or the ranking of the preferred AI/ML models or functions to be activated.
(8) The model or function management information of the terminal, where the model or function management information is used to represent that the terminal performs model or function management based on the output of the at least one model or function, and the model or function management includes at least one of following: model or function activation processing, model or function switching processing, model or function update processing, or fallback processing.

In an embodiment, the model or function activation processing includes model or function activation, or model or function deactivation.

In an embodiment, the model or function switching processing includes model or function switching, or model or function non-switching.

In an embodiment, the model or function update processing includes model or function update, or model or function non-update.

In an embodiment, the fallback processing includes fallback or non-fallback.

For example, the terminal performs switching (or non-switching), fallback (or non-fallback), activation (or non-activation), or update (or non-update) of the AI/ML model or function based on the inference result of the AI/ML model or function to be evaluated, and feeds back the execution information of the UE, i.e., model or function management information, to the base station.

For example, the UE performs management of the AI/ML model or function, such as model or function switching, fallback, update, etc., based on the performance evaluation result of the AI/ML model or function to be evaluated, and reports the result to the NW. For example, in case that the double-sided AI/ML model or function is used for channel compression and decompression, the UE side decides to switch the UE-side model or function from model or function 1 to model or function 2 and reports it to the NW. The NW may also perform corresponding operations on the NW-side model or function, such as switching the NW-side model or function to match the newly switched model or function on the UE side, or determining that there is no need to switch the model or function.

In an embodiment, the model or function management information of the terminal may be used for performance monitoring on the UE side and subsequent decision-making on the UE side.

In an embodiment, the terminal may feedback the performance evaluation result to the network side. In case of using Method 1 or Method 3, for a time-domain continuous first time window, the performance evaluation result is fed back after the first time window ends.

In an embodiment, in case of obtaining the performance evaluation result based on the input distribution characteristic and/or the application condition corresponding to the model or function in the set of models or functions to be evaluated, the performance evaluation result includes one of more of following:
an input corresponding to the model or function in the set of models or functions to be evaluated;
input distribution characteristic information corresponding to the model or function in the set of models or functions to be evaluated;
characteristic offset information of the input distribution characteristic, corresponding to the model or function in the set of models or functions to be evaluated, relative to a reference input distribution characteristic;
the application condition corresponding to the model or function in the set of models or functions to be evaluated;
information of applicability of the model or function, in the set of models or functions to be evaluated, to a condition where the terminal is located, where the information of applicability is determined based on the condition where the terminal is located and the application condition corresponding to the model or function;
a model or function that the terminal expects to activate, or a model or function that the terminal does not expect to activate, where the model or function that the terminal expects to activate or the model or function that the terminal does not expect to activate is determined based on an input distribution characteristic offset and/or the application condition corresponding to the model or function in the set of models or functions to be evaluated; or
model or function management information of the terminal, where the model or function management information is used to represent that the terminal performs model or function management based on the input distribution characteristic and/or the application condition corresponding to the model or function in the set of models or functions to be evaluated, and the model or function management includes at least one of following: model or function activation processing, model or function switching processing, model or function update processing, or fallback processing.

In an embodiment, the model or function that the terminal expects to activate may be one or more models or functions.

In an embodiment, the model or function that the terminal does not expect to activate may be one or more models or functions.

In an embodiment, model or function management may correspond to a minimum execution period T or interval G. For example, model or function management operations are performed only at the 100th, 200th, 300th... slot after obtaining all or part of the performance evaluation results, that is, the period T or interval G is 100 slots; the UE may feedback model or function management information at the 164th slot and perform model or function management at the 200th slot.

In an embodiment, model or function management may correspond to a minimum execution period T or interval G. For example, model or function management operations are performed only at the 100th, 200th, 300th... slot after obtaining all or part of the performance evaluation results, that is, the period T or interval G is 100 slots; the UE may perform model or function management at the 164th slot and feedback model or function management information after completing the execution process of model or function management.

In an embodiment, the terminal may feedback the performance evaluation result to the network side. In case of using Method 2 or Method 3, the performance evaluation result fed back from the terminal to the network side may include one or more of following.
(1) The input corresponding to the model or function in the set of models or functions to be evaluated

For example, it may be the input of the AI/ML model or function to be evaluated, which may be used by the NW side for performance monitoring and subsequent decision-making.

In an embodiment, the network side may extract the input distribution characteristic information corresponding to the model or function in the set of models or functions to be evaluated based on the input corresponding to the model or function in the set of models or functions to be evaluated, and perform subsequent evaluation.

(2) The input distribution characteristic information corresponding to the model or function in the set of models or functions to be evaluated

For example, it may be the characteristic information of the input of the AI/ML model or function to be evaluated, which may be used by the NW side for performance monitoring and subsequent decision-making.

(3) The characteristic offset information, of the input distribution characteristic corresponding to the model or function in the set of models or functions to be evaluated, relative to the reference input distribution characteristic

In an embodiment, the characteristic offset information may be used by the NW side for performance monitoring and subsequent decision-making.

(4) The application condition corresponding to the model or function in the set of models or functions to be evaluated, such as the current application condition

For example, it may be the information of applicability of the AI/ML model or function to be evaluated under the current application condition, which may be used by the NW side for performance monitoring and subsequent decision-making.

(5) The information of applicability of the model or function in the set of models or functions to be evaluated to the condition where the terminal is located

In an embodiment, the information of applicability is determined based on the condition where the terminal is located and the application condition corresponding to the model or function.

In an embodiment, the information of applicability may be used by the NW side for performance monitoring and subsequent decision-making.

In an embodiment, the information of applicability may be determination information only including "yes" and "no", or determination information including multiple available values. For example, it may be multiple reportable values, such as {0, 0.1, 0.2, 0.3...1}, in the interval from 0 to 1 with an interval of 0.1, where a value closer to 1 indicates higher applicability and better performance.

(6) The suggestion proposed by the terminal to the network device based on the input or application condition of the model or function to be evaluated

For example, the terminal may suggest the network side to activate another model or function, based on the input characteristic information of the model or function or the matching degree between the current condition and the application condition of the model or function, or provide ranking information of the models or functions to be evaluated in descending order of preference.

(7) The model or function that the terminal expects to activate, or the model or function that the terminal does not expect to activate

In an embodiment, the model or function that the terminal expects to activate or the model or function that the terminal does not expect to activate is determined based on the input distribution characteristic offset and/or application condition corresponding to the model or function in the set of models or functions to be evaluated.

For example, whether to activate other AI/ML models or functions, or the ranking of the preferred AI/ML models or functions to be activated.

(8) The model or function management information of the terminal, where the model or function management information is used to represent that the terminal performs model or function management based on the input distribution characteristic and/or application condition corresponding to the model or function in the set of models or functions to be evaluated, and the model or function management includes at least one of following: model or function activation processing, model or function switching processing, model or function update processing, or fallback processing.

In an embodiment, the model or function activation processing includes model or function activation, or model or function deactivation.

In an embodiment, the model or function switching processing includes model or function switching, or model or function non-switching.

In an embodiment, model or function update processing includes model or function update, or model or function non-update.

In an embodiment, the fallback processing includes fallback or non-fallback.

For example, the terminal performs switching (or non-switching), fallback (or non-fallback), activation (or non-activation), or update (or non-update) of the AI/ML model or function based on the input or application condition of the AI/ML model or function to be evaluated, and feeds back the execution information of the UE, i.e., model or function management information, to the base station.

In an embodiment, the terminal may perform management of the AI/ML model or function, such as model or function switching, fallback, update, etc., based on the performance evaluation result of the AI/ML model or function to be evaluated, and report the result to the NW.

For example, in case that the double-sided AI/ML model or function is used for channel compression and decompression, the UE side decides to switch the UE-side model or function from model or function 1 to model or function 2 and reports it to the NW. The NW may also perform corresponding operations on the NW-side model or function, such as switching the NW-side model or function to match the newly switched model or function on the UE side, or determining that there is no need to switch the model or function.

In an embodiment, the performance evaluation result obtained by Method 3 may include any one of following:
the evaluation result of the subset of models or functions through Method 1;
the evaluation result of the subset of models or functions through Method 1, and the evaluation result of the set of models or functions to be evaluated through Method 2; or
the evaluation result of the subset of models or functions through Method 1, and the evaluation result of the remaining M-M' AI/ML models or functions, in the set of models or functions to be evaluated that are not evaluated through Method 1, but through Method 2.

In an embodiment, the first time window is a continuous time window, or the first time window includes multiple non-overlapping sub-time windows.

In an embodiment, the first time window may be continuous or discontinuous in the time domain.

In an embodiment, a discontinuous first time window may include multiple sub-time windows.

In an embodiment, the discontinuous first time window may include multiple sub-time windows, and the multiple sub-time windows do not overlap with each other in the time domain.

In an embodiment, the discontinuous first time window may include multiple sub-time windows, and the multiple sub-time windows may appear periodically.

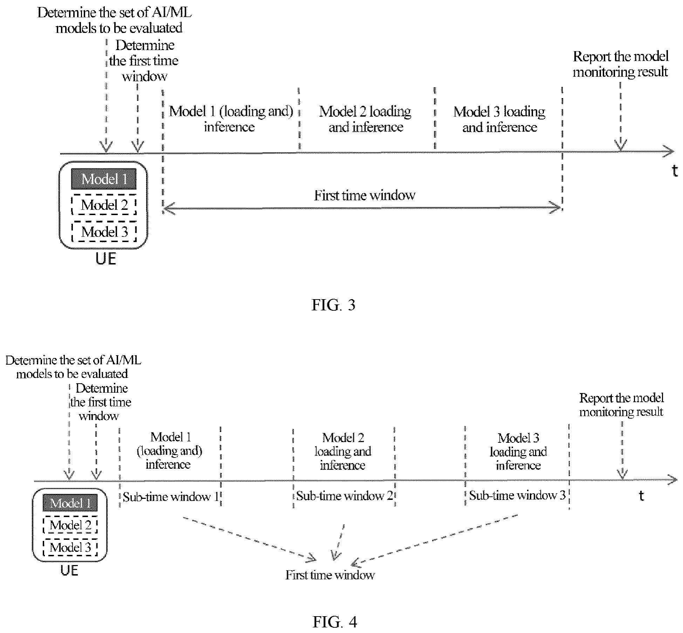

FIG. 3 is a first schematic diagram of a first time window according to an embodiment of the present application. As shown in FIG. 3, the first time window may be continuous in the time domain. Method 1 is used for monitoring models or functions on 3 AI/ML models or functions (model or function 1, model or function 2, and model or function 3) on the UE side, that is, model or function 1, model or function 2, and model or function 3 are activated in turn within the first time window.

In an embodiment, "loading" in the embodiments of the present application may also be considered as "activating". Assuming that the model or function 1 is activated by the UE at the beginning, the model or function 1 may not need to be "loaded". In case that the model or function 1 is not activated by the UE at the beginning, the model or function 1 also need to be loaded.

In an embodiment, in FIG. 3, the UE may only activate one AI/ML model or function at a time, which is only an implementable example and does not mean that the UE may only activate one AI/ML model or function at a time in the embodiments of the present application.

For example, in case that the number of models or functions N activated by the terminal at the same time is greater than 1, the terminal may activate different combinations of models or functions in turn (for example, activating {model or function 1, model or function 2} at time 1, activating {model or function 3, model or function 4} at time 2...); or, the terminal may at least ensure the use of the currently activated AI/ML model or function (such as AI/ML model or function 1) and activate other AI/ML models or functions in turn. Each time, in addition to the currently activated model or function 1, the terminal may also activate another N-1 models or functions at the same time (for example, activating {model or function 1, model or function 2} at time 1, activating {model or function 1, model or function 3} at time 2, activating {model or function 1, model or function 4} at time 3...).

FIG. 4 is a second schematic diagram of a first time window according to an embodiment of the present application. As shown in FIG. 4, assuming that the first time window includes 3 sub-time windows, one or more models or functions may be activated in each sub-time window.

In an embodiment, in case that the first time window includes multiple sub-time windows, the length of each sub-time window may be determined by a method similar to that used to determine the length of the time-domain continuous first time window, such as determined by predefinition, determined based on instructions or configurations from the network side, determined by the terminal and then informed to the network side, implicitly indicated by indicating the end time of each sub-time window, or determined by indicating the time offset of the start time of each sub-time window relative to the end time of the previous sub-time window (one or more of the start time of the first sub-time window, the end time of the first sub-time window, or the length of each sub-time window is simultaneously indicated).

In an embodiment, the length of each sub-time window may also be calculated in a T/K manner, where K is a number of sub-time windows, and the start position of each sub-time window may be determined based on an indicated offset value of the start of each sub-time window relative to the start of the first time window, or may be determined based on an offset value of the start of the first sub-time window relative to the start of the first time window and an offset between each sub-time window.

In an embodiment, the length of each sub-time window may also be indicated by other manners. Any way that may determine the time-domain position of each sub-time window is applicable to the embodiments of the present application, which is not limited here.

In an embodiment, the first time window is a periodic time window or a time window triggered based on an instruction from the network side.

In an embodiment, the first time window is a periodic time window.

In an embodiment, the network side may configure the first time window as a periodic time window through semi-static configuration, for example, starting the first time window every 50 ms.

In an embodiment, the first time window is a time window triggered by dynamic signaling.

In an embodiment, the network side may indicate the terminal to start the first time window through dynamic signaling.

In an embodiment, the start time of the first time window may be periodic or dynamically indicated by the network side.

In an embodiment, for a periodic first time window, the network side may configure the cycle period of the first time window and the start position within each period, where the start position is the offset value between the start of the first time window and the start of its period. The unit of the period and start position may be frame, subframe, slot, symbol, etc., or other units.

In an embodiment, for the first time window triggered by dynamic indication, the network side may trigger the terminal to perform model or function monitoring, that is, start the first time window, by transmitting dynamic signaling, such as downlink control information (DCI) and media access control-control element (MAC-CE).

In an embodiment, a length of the first time window is determined based on a predefined fixed duration, or determined based on configuration information or indication information from the network side, or determined by the terminal, or determined based on predefined first information;
where the first information includes one or more of following: a number of models or functions in the set of models or functions to be evaluated, a number of models or functions simultaneously activated by the terminal, a number of models or functions remaining activated, or a duration from activating any model or function in the set of models or functions to be evaluated to obtaining the output of the model or function.

In an embodiment, the length of the first time window may be determined by the terminal and then reported to the network side.

In an embodiment, the length of the first time window may be configured or indicated to the terminal by the network side.

In an embodiment, the length of the first time window may be determined based on a predefined manner.

In an embodiment, predefining the length of the first time window may include predefining one or more of following:
predefining a fixed time length, for example, the predefined fixed time length is 1000 ms; or
determining the length of the first time window based on at least one of the first information, where the first information includes one or more of following:
   the number of models or functions in the set of models or functions to be evaluated, such as the number of AI/ML models or functions to be evaluated;
   the number of models or functions activated by the terminal at the same time, such as the number of AI/ML models or functions that the terminal may activate at the same time;
   the number of models or functions remaining activated, such as the number of AI/ML models or functions that must remain activated all the time; or
   the time length from activating any model or function in the set of models or functions to be evaluated to obtaining the output of the model or function, such as the time length for activating and using the AI/ML model or function for inference once.

In an embodiment, the length of the first time window may be T.

In an embodiment, the length T of the first time window may be determined by the terminal itself and then reported to the network side.

In an embodiment, the length T of the first time window may be configured or indicated by the network side.

In an embodiment, the length T of the first time window may be determined based on a predefined manner.

In an embodiment, in addition to directly configuring the length of the first time window through the time length T, it may also be implicitly indicated by indicating the end time of the first time window. In this case, the difference between the end time and the start time is the length of the first time window.

In an embodiment, in case that the terminal reports the length of the first time window, the terminal may report an appropriate time length to ensure that the evaluation of the models or functions to be evaluated is completed within the first time window.

In an embodiment, in case that the network side configures or indicates the length of the first time window, the network side may semi-statically configure through higher-layer signaling or indicate the length of the first time window to the terminal through dynamic signaling.

In an embodiment, the network side may configure or indicate a reasonable length of the first time window based on the capabilities reported by the terminal, such as one or more of the number of sets of AI/ML models or functions to be evaluated, the number of AI/ML models or functions that the terminal may use at the same time, or the time required for the terminal to activate the AI/ML models or functions, and the terminal may complete the evaluation of the AI/ML models or functions to be evaluated within the length of the first time window.

In an embodiment, the length T of the first time window may be determined by a predefined method. For example, the length of the first time window may be determined as ceil(M/N) * t based on one or more of the number M of AI/ML models or functions to be evaluated, the number N of AI/ML models or functions that the terminal may activate at the same time, or the time length t for activating and using the AI/ML models or functions for inference, where ceil(x) represents rounding up x. In case that the terminal does not report the above parameters or the network side does not configure the above parameters, a default value may be used by agreement, for example, the default value of the number N of AI/ML models or functions that may be activated at the same time is N_default, and N_default = 1.

In an embodiment, assuming that the number N of AI/ML models or functions that the terminal may activate at the same time is greater than 1 and the terminal always ensures that the currently activated AI/ML model or function is available (for example, in case that the terminal needs to activate model or function 1 at any time, {model or function 1, model or function 2} may be activated in the first sub-window, or {model or function 1, model or function 3} may be activated in the second sub-window...), the length of the first time window may be ceil(M/(N-1)) * t.

In related art, limited by factors such as power consumption and computing capability, the number of AI/ML models or functions that a UE may activate and use at the same time may be very limited. In a typical case, UE may only activate one AI/ML model or function at a time and cannot use multiple AI/ML models or functions for inference at the same time. In the embodiments of the present application, multiple models or functions on the terminal side may be activated for inference, which may more effectively evaluate the models or functions deployed on the terminal side, obtain more appropriate evaluation results, and further improve the communication performance of the terminal.

In an embodiment, the lengths of the first time windows for obtaining different performance evaluation results (such as inference accuracy, system performance, or input offset) may be the same or different. In case of the same length, the network side may only configure one length of the first time window; in the case of different lengths, the network side may configure multiple sets of different parameters for the terminal, corresponding to the lengths of the first time windows for obtaining different performance evaluation results. The terminal may use configurations of different lengths of the first time windows based on specific model or function monitoring methods.

In an embodiment, in case that the duration of the first time window is determined by the terminal, the method further includes:
transmitting first indication information to the network side, where the first indication information is used to indicate the duration of the first time window determined by the terminal.

In an embodiment, the length of the first time window may be determined by the terminal itself and informed to the network side through the first indication information.

In an embodiment, transmitting the performance evaluation result to the network side includes one or more of following:
transmitting a performance evaluation result corresponding to a model or function activated within the first time window after the first time window ends; or
transmitting a performance evaluation result corresponding to a model or function activated before the first time window within the first time window.

In an embodiment, the terminal may report, within the first time window, the performance evaluation result of the model or function activated before the first time window.

For example, the terminal may report, within the first time window, the inference result of the AI/ML model or function activated before the first time window.

In an embodiment, the terminal may report, within the first time window, the performance evaluation result of the model or function activated in the time before the first time window.

In an embodiment, the terminal may report, within the first time window, the performance evaluation result of the model or function activated in the time before the first time window and closest to the first time window.

For example, the terminal may report, within the first time window, the inference result of the AI/ML model or function activated in the time before the first time window and closest to the first time window.

In an embodiment, as shown in FIG. 3, for a time-domain continuous first time window, the terminal may feedback the performance evaluation result after the first time window ends.

In an embodiment, the time interval between the time when the terminal feeds back the performance evaluation result and the end time of the first time window may be configured or indicated by the network side, or predefined.

In an embodiment, as shown in FIG. 4, for a time-domain discontinuous first time window (including multiple sub-time windows), the terminal may feedback the performance evaluation result after the first time window ends, similar to the time-domain continuous case.

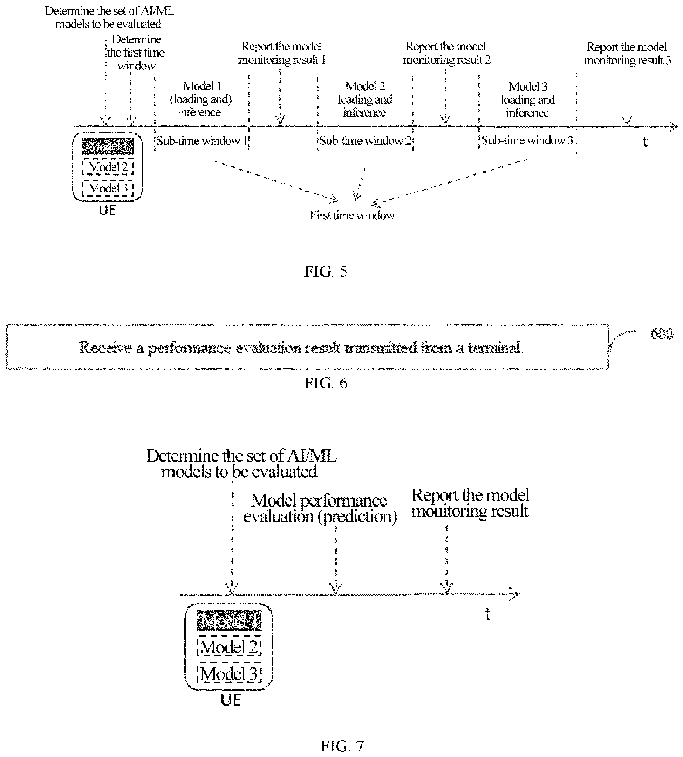

In an embodiment, FIG. 5 is a third schematic diagram of a first time window according to an embodiment of the present application. As shown in FIG. 5, for a time-domain discontinuous first time window (including multiple sub-time windows), the terminal may feedback the monitoring result of the model or function activated within the current sub-time window after each sub-time window, and the relationship between each sub-time window and the feedback timing is similar to the time-domain continuous case.

In an embodiment, the method further includes one or more of following:
not transmitting, within the first time window, a performance evaluation result corresponding to a model or function activated within the first time window;
not expecting to transmit, within the first time window, a performance evaluation result corresponding to a model or function activated within the first time window; or
not expecting to transmit, within the first time window, a performance evaluation result.

In an embodiment, the terminal may not report the inference result or performance evaluation result corresponding to any model or function in the set of models or functions to be evaluated.

In an embodiment, the terminal may not report, within the first time window, the inference result or performance evaluation result corresponding to the model or function activated within the first time window.

In an embodiment, the terminal may not report the performance evaluation result corresponding to any model or function in the set of models or functions to be evaluated.

In an embodiment, the terminal may not report, within the first time window, the performance evaluation result corresponding to the model or function activated within the first time window.

For example, the UE does not report, within the first time window, the inference result or performance evaluation result of the AI/ML model or function to be evaluated within the first time window, including one or more of following situations:
the terminal does not report the inference result or performance evaluation result of the AI/ML model or function configured semi-statically by the network side, and does not report the inference result or performance evaluation result of the AI/ML model or function dynamically indicated by the NW; or
the terminal does not expect the network side to semi-statically configure to report the AI/ML inference result or performance evaluation result within the first time window, and does not expect the network side to dynamically indicate the UE to report the AI/ML inference result or performance evaluation result within the first time window.

In an embodiment, in case that the terminal activates the AI/ML models or functions to be evaluated in turn, at a specific moment within the first time window, the terminal may not be able to use the data at the specific moment as input to a specific AI/ML model or function and to obtain the corresponding output through inference. Then the terminal may not report, within the first time window, the inference result or performance evaluation result of the AI/ML model or function to be evaluated within the first time window, and the terminal may reasonably plan the computing, storage, and energy consumption resources allocated to AI/ML model or function monitoring.

For example, in FIG. 4, the UE cannot perform inference using AI/ML model or function 1 in sub-time window 2.

For example, the terminal may not report the inference result or performance evaluation result of the model or function semi-statically configured by the network side, and may not report the inference result or performance evaluation result of the model or function dynamically indicated by the network side.

For example, the network side may configure or indicate the terminal to perform model or function inference and reporting within the first time window. However, even if configured or indicated by the network side, the terminal may not perform reporting.

For example, the terminal may not expect the network side to semi-statically configure to report inference result or performance evaluation result within the first time window, and may not expect the network side to dynamically indicate the terminal to report inference result or performance evaluation result within the first time window.

For example, the network side may not configure or indicate the terminal to perform model or function inference and reporting within the first time window.

In an embodiment, in case that the first time window includes multiple non-overlapping sub-time windows, transmitting the performance evaluation result to the network side includes one or more of following:
transmitting a performance evaluation result corresponding to a model or function activated within the sub-time window after each sub-time window ends;
transmitting performance evaluation results corresponding to models or functions activated within N sub-time windows after the N sub-time windows end, where N is a positive integer and less than a number of the multiple sub-time windows included in the first time window;
transmitting performance evaluation results corresponding to models or functions activated within multiple sub-time windows after all the multiple sub-time windows included in the first time window end.

In an embodiment, the terminal may feedback the performance evaluation result to the network side. In case of using Method 1 or Method 3, for the first time window including multiple discontinuous sub-time windows, the monitoring result of the model or function activated within the current sub-time window may be fed back after each sub-time window, or the performance monitoring result may be fed back after the first time window ends completely, or the performance evaluation result corresponding to the model or function activated within the N sub-time windows may be fed back after every N sub-time windows end.

In an embodiment, the feedback method of the terminal may be determined based on the indication or configuration of the network side, or determined based on predefined rules.

In an embodiment, the terminal may report, within the first time window, the inference result or performance evaluation result of the activated AI/ML model or function before the first time window.

In an embodiment, the network side may configure or indicate the terminal to perform model or function inference and reporting within the first time window. However, what the terminal reports is not the result of model or function inference performed within the first time window, but the result before the first time window.

In an embodiment, the terminal may report, within the first time window, the inference result or performance evaluation result of the AI/ML model or function activated in the time before the first time window and closest to the first time window, and the NW may obtain the inference result or performance evaluation result of the AI/ML model or function before the first time window. Although the inference result or performance evaluation result within the first time window cannot be known for sure, the inference result or performance evaluation result before the first time window may also have certain reference value. Especially in case that the movement speed of the terminal is not large and the change of the network environment is not large, the two inference results or performance evaluation results may not differ much, and the network side may optimize the network and improve network performance accordingly.

In an embodiment, determining the set of models or functions to be evaluated includes:
determining the set of models or functions to be evaluated at least partly based on second indication information from the network side.

In an embodiment, in case that the terminal determines the set of models or functions to be evaluated, it may be determined by the terminal itself.

In an embodiment, in case that the terminal determines the set of models or functions to be evaluated, it may be determined based on the indication from the network side.

In an embodiment, the set of models or functions to be evaluated may be indicated by the network side, and the network side may know which specific models or functions the terminal side have.

For example, the models or functions of the terminal are configured/transmitted from the network side.

For example, the terminal reports to the network side which models or functions it has through model or function identification. The network side may indicate the set of models or functions to be evaluated to the terminal through higher-layer signaling (such as RRC signaling) or dynamic signaling, for example, indicating an index or model/function ID of the models or functions to be evaluated.

In an embodiment, the set of models or functions to be evaluated may be determined by the terminal itself. For example, the terminal has multiple models or functions and selects to evaluate a part of the models or functions. The terminal does not need to report each of its models or functions to the NW. The terminal may report the set of models or functions to be evaluated to the network side, for example, reporting the index or model/function ID of the models or functions to be evaluated, and the network side participates in the lifecycle management of the model or function of the terminal.

In an embodiment, the method further includes:
transmitting third indication information to the network side, where the third indication information is used to indicate the set of models or functions to be evaluated determined by the terminal.

In an embodiment, after determining the model or function set to be evaluated, the terminal may transmit the third indication information to the network side, and inform a determined result to the network side.

FIG. 6 is a schematic flowchart of a method for performance evaluation according to an embodiment of the present application. As shown in FIG. 6, an execution subject of the method includes a network side, such as a network side device or a base station. The method includes following steps.

Step 600: receiving a performance evaluation result transmitted from a terminal;
where the performance evaluation result is determined based on a performance evaluation on a model or function in a set of models or functions to be evaluated, and the model or function in the set of models or functions to be evaluated is deployed on the terminal.

The method for performance evaluation according to the embodiments of the present application monitors or evaluates a single-sided AI/ML model or function deployed on the UE side, or monitors or evaluates a part deployed on the UE side in a double-sided AI/ML model or function. Each embodiment of the present application monitors the AI/ML model or function on the UE side.

In an embodiment, the model or function includes the AI/ML model or function, or other model or function which implements a similar inference function. In each embodiment of the present application, the AI/ML model or function is interpreted as an example of the model or function, but not as a limitation on the model or function, which is not limited in the embodiment of the present application.

In an embodiment, the set of models or functions to be evaluated is an entire set of all models or functions deployed on the terminal, or a subset of the entire set of all models or functions deployed on the terminal.

In an embodiment, the set of models or functions to be evaluated includes one model or function, or includes two models or functions, or includes P models or functions, where P is an integer greater than or equal to 1 and less than a number of all models or functions deployed on the terminal.

In an embodiment, the model or function to be evaluated includes a currently activated AI/ML model or function.

In an embodiment, the model or function to be evaluated must include the currently activated AI/ML model or function, for example, the performance of currently activated AI/ML model or function is always monitored.

In an embodiment, the model or function to be evaluated does not include the currently activated AI/ML model or function.

In an embodiment, the model or function to be evaluated must not include the currently activated AI/ML model or function, for example, the performance of a currently inactivated AI/ML model or function is always monitored.

In an embodiment, the model or function to be evaluated must include the currently activated AI/ML model or function and must include at least one currently inactivated AI/ML model or function to ensure that the performance of the activated AI/ML model or function and the performance of the inactivated AI/ML model or function are always compared to allow the UE or NW to determine whether to switch the AI/ML model or function.

In an embodiment, the terminal feeds back the result to the network side after the performance evaluation.

In an embodiment, a time interval, between the time of feedback for the terminal and the time of the performance evaluation, is configured or indicated by the network side, or is predefined.

In an embodiment, the performance evaluation result includes the performance of the corresponding model or function in the environment where the terminal is located.

In an embodiment, the performance evaluation result serves as a basis, for determining a model or function from the set of models or functions, applicable for the environment where the terminal is located.

In an embodiment, after the terminal determines the set of models or functions to be evaluated, the performance evaluation on the model or function in the set of models or functions to be evaluated is performed to obtain the performance evaluation result which is used to reflect the performance of the model or function in the environment where the terminal is located, to provide a reference basis for selecting a model or function applicable for the environment where the terminal is located, and to avoid a defect in the related art that only whether the currently activated model or function of the terminal is available is determined. In the embodiment of the present application, not only whether the currently activated model or function of the terminal is available is determined, a model or function further applicable to the environment where the terminal is located is also selected to improve the communication performance of the terminal.

In an embodiment, the embodiment of the present application is applied to a communication system including a network-side device and a terminal device, or applied to a communication system including at least one terminal device; or applied to a communication system including at least one other communication device similar to the terminal device, or applied to a communication system including at least one other communication device deployed with the AI/ML model or function, which is not limited in the embodiment of the present application.

In an embodiment, the terminals referred to in the embodiment of the present application may be directly replaced to any device deployed with the AI/ML model or function, which is not limited in the embodiment of the present application.

In an embodiment, the network side includes the network side device, such as a base station, a gNB, etc., which is not limited in the embodiment of the present application.

FIG. 2 is a schematic diagram of an application scenario according to an embodiment of the present application. As shown in FIG. 2, multiple UEs including UE1 and UE2 apply for a network connection service, and the gNB performs radio service for the UEs. and data interaction and transmission are performed between the gNB and UE1, UE2 through radio communication.

The embodiment of the present application is applied to the communication system with the AI/ML model or function deployed on the UE side, for example, the embodiment of the present application is applied to a 5G NR system. It should be noted that the application scenario given in FIG. 2 only serves as an example of an implementable embodiment of the embodiments of the present application, and does not serve as a limitation of the application scenarios of the embodiments of the present application.

According to the method for performance evaluation provided in the embodiments of the present application, the performance evaluation result is obtained by evaluating the performance of the model or function deployed on the terminal, and the performance evaluation result serves as a basis for determining the model or function is applicable for the environment where the terminal is located, thereby improving the communication performance of the terminal.

In an embodiment, in case of monitoring or evaluating the model or function in the set of models or functions to be evaluated, following three methods may be included.

Method 1: activating at least one model or function in the set of models or functions to be evaluated within the first time window, and evaluating or monitoring the least one model or function.

Method 2: evaluating or monitoring the model or function in the set of models or functions to be evaluated based on the input distribution characteristic and/or application condition corresponding to the model or function in the set of models or functions to be evaluated, without the first time window.

Method 3: preliminary evaluating or monitoring the model or function in the set of models or functions to be evaluated based on the input distribution characteristic and/or application condition corresponding to the model or function in the set of models or functions to be evaluated to obtain the model or function that may be further evaluated or monitored (a subset of the models or functions), and then activating at least one model or function in the set of models or functions to be evaluated within the first time window and evaluating or monitoring the least one model or function.

In an embodiment, in case that the terminal activates at least one model or function within the first time window, it may activate at least one model or function to be evaluated in turn and use the activated model or function for inference, where the order in which the terminal activates the at least one model or function to be evaluated may be determined by the terminal itself. The terminal may inform the network side or not inform the network side, or the order may be indicated by the network side.

In an embodiment, activating at least one model or function in the set of models or functions to be evaluated, or activating at least one model or function in the subset of models or functions, within the first time window may be using the activated at least one model or function for inference, and performing evaluation or monitoring based on the inference result.

In an embodiment, in case of activating at least one model or function in the set of models or functions to be evaluated, or activating at least one model or function in the subset of models or functions, within the first time window, using the activated at least one model or function for inference, and performing evaluation or monitoring based on the inference result, the evaluation or monitoring of the model or function may be performed based on one or more of following:
an accuracy of the inference result of the model or function;
a system performance after applying the inference result of the model or function to the communication system; or
whether an output characteristic is offset, or the degree of offset.

In an embodiment, the output of the model or function may include the inference result of the model or function.

In an embodiment, the use of Method 1, Method 2, or Method 3 for monitoring models or functions in the embodiments of the present application may be predefined or configured by the base station.

For example, the base station may configure the UE to use one of Method 1, Method 2, or Method 3 through radio resource control (RRC) signaling.

In an embodiment, in case of using Method 2 for model or function evaluation, the terminal does not need to activate the AI/ML model or function to be evaluated. Since the AI/ML model or function to be evaluated does not need to be activated in turn, the UE may complete the evaluation within a very short time, and the first time window may not need to be configured.

In an embodiment, the input distribution characteristic may include any signal or channel involved in the communication process, any parameter representing the signal, channel, transmission quality, etc. involved in the communication process, or part or all of the model or function information, which is not limited in the embodiments of the present application.

In an embodiment, the terminal may evaluate and measure the offset between characteristics by comparing the input distribution characteristic used in training a certain model or function (such as the Doppler delay spread of a signal) with the same type of characteristic of the currently measured radio channel, to evaluate the performance of the model or function. In case that the offset is less than a certain threshold, it is estimated that the performance of the model or function is good. In case that the offset exceeds the certain threshold, it is estimated that the model or function is no longer applicable to the current environment.

In an embodiment, in case of evaluating the performance of the model or function based on the offset, the threshold of the offset may be configured or indicated by the network side, determined by the terminal itself, or predefined.

In an embodiment, for AI/ML models or functions with different functions, the input distribution characteristics and/or application conditions that need to be monitored may be different.

For example, the AI/ML model or function used for beam management may need to monitor the RSRP distribution of each beam.

For example, the AI/ML model or function used for positioning may need to monitor the strength and time of the main path or secondary path of the channel impulse response.

In an embodiment, the characteristics that a model or function needs to monitor are part of the model or function information. The application condition of a model or function may be provided or indicated by the trainer, provider, or transmitter of the model or function.

In an embodiment, the application condition of the model or function may be configured or indicated by the network side, or determined by the terminal itself.

For example, the performance of the AI/ML model or function may be evaluated by comparing the application condition of a certain AI/ML model or function with the condition of the current environment. In case that the application condition of the AI/ML model or function is the same as or similar to the condition of the current environment, such as both being outdoor scenarios, both being scenarios with dense obstacles, or both being high-speed moving scenarios, etc., it is estimated that the performance of the AI/ML model or function is good. Conversely, in case that the application condition of the AI/ML model or function is opposite to or significantly different from the condition of the current environment, such as one application condition being outdoor and the other being indoor, one application condition being dense obstacles and the other being sparse obstacles, one application condition being high-speed movement and the other being low-speed movement, it may be estimated that the performance of the AI/ML model or function is poor.

In an embodiment, in case of using Method 3 for monitoring or evaluation, it is divided into following two steps:
(1) for the set of models or functions to be evaluated, evaluating the performance of M models or functions therein through Method 2, and determining a subset of models or functions including M' models or functions from the set of models or functions to be evaluated; and
(2) for the subset of models or functions, evaluating the performance of the M' AI/ML models or functions through Method 1.

Determining the subset of models or functions from the set of models or functions to be evaluated may preliminarily screen out the models or functions that may be applicable to the current environmental condition, and reduce the number of models or functions that need to be evaluated through Method 1. The specific determination method may be as following.

In case that the performance evaluation result obtained through Method 2 is lower than a specific threshold or falls within a specific interval, it is considered that further evaluation using Method 1 may be performed.

For example, in case that the offset between the characteristic distribution of the input in the current environment and the characteristic distribution of the input during the training of the model or function is less than a certain threshold, or the characteristic distribution of the input in the current environment falls within a specific interval (where the interval may be the interval determined by the characteristic distribution of the input during the training of the AI/ML model or function), then the preliminary performance evaluation result is: applicable to the current environment.

In an embodiment, other methods that may be used to roughly evaluate the performance of the AI/ML model or function and determine potential applicability of the AI/ML model or function to the current environmental condition by "estimating the performance of AI/ML models or functions without AI/ML model or function inference" are also applicable to the embodiments of the present application.

In an embodiment, the terminal may feedback the performance evaluation result to the network side. In case of using Method 1 or Method 3, the performance evaluation result fed back from the terminal to the network side may include one or more of following.
(1) The output of the at least one model or function

For example, it may be the inference result of the AI/ML model or function to be evaluated, which may be used by the network side to perform performance monitoring and subsequent decision-making based on the output of the at least one model or function.

(2) The accuracy evaluation result of the output of the at least one model or function

For example, it may be the measurement result (measurement of accuracy) of the inference result of the AI/ML model or function to be evaluated, which may be used by the terminal to perform performance monitoring and subsequent decision-making based on the accuracy evaluation result of the output of the at least one model or function.

(3) The system performance evaluation result after applying the output of the at least one model or function to a communication system

For example, it may be the measurement result (measurement of system performance) of the inference result of the AI/ML model or function to be evaluated.

In an embodiment, the system performance may be, for example, bit error rate, block error rate, throughput, etc.

(4) The output distribution characteristic information of the at least one model or function

For example, it may be the distribution characteristic of the output of the AI/ML model or function to be evaluated, such as the distribution area of an output positioning position.

(5) The offset it may be information of the output distribution characteristic, of the at least one model or function, relative to the reference output distribution characteristic

For example, the offset of the output distribution characteristic of the AI/ML model or function to be evaluated compared with the reference output distribution characteristic, such as a coordinate offset of the output positioning position relative to a reference position.

(6) Suggestion information proposed by the terminal to the network device based on the inference result of the model or function to be evaluated

For example, the terminal suggests the NW to activate another model or function, based on the accuracy of the inference result of the AI/ML model or function or the system performance after applying the inference result of the AI/ML model or function to the communication system, or provides ranking information of the AI/ML models or functions to be evaluated in descending order of preference.

In an embodiment, the suggestion information may be used for performance monitoring on the UE side and subsequent decision-making on the NW side.
(7) The model or function that the terminal expects to activate, or the model or function that the terminal does not expect to activate, where the model or function that the terminal expects to activate or the model or function that the terminal does not expect to activate is determined based on the output of the at least one model or function, such as whether to activate other AI/ML models or functions, or the ranking of the preferred AI/ML models or functions to be activated.
(8) The model or function management information of the terminal, where the model or function management information is used to represent that the terminal performs model or function management based on the output of the at least one model or function, and the model or function management includes at least one of following: model or function activation processing, model or function switching processing, model or function update processing, or fallback processing.

In an embodiment, the model or function activation processing includes model or function activation, or model or function deactivation.

In an embodiment, the model or function switching processing includes model or function switching, or model or function non-switching.

In an embodiment, the model or function update processing includes model or function update, or model or function non-update.

In an embodiment, the fallback processing includes fallback or non-fallback.

For example, the terminal performs switching (or non-switching), fallback (or non-fallback), activation (or non-activation), or update (or non-update) of the AI/ML model or function based on the inference result of the AI/ML model or function to be evaluated, and feeds back the execution information of the UE, i.e., model or function management information, to the base station.

In an embodiment, the UE performs management of the AI/ML model or function, such as model or function switching, fallback, update, etc., based on the performance evaluation result of the AI/ML model or function to be evaluated, and reports the result to the NW. For example, in case that the double-sided AI/ML model or function is used for channel compression and decompression, the UE side decides to switch the UE-side model or function from model or function 1 to model or function 2 and reports it to the NW. The NW may also perform corresponding operations on the NW-side model or function, such as switching the NW-side model or function to match the newly switched model or function on the UE side, or determining that there is no need to switch the model or function.

In an embodiment, the model or function management information of the terminal may be used for performance monitoring on the UE side and subsequent decision-making on the UE side.

In an embodiment, the terminal may feedback the performance evaluation result to the network side. In case of using Method 1 or Method 3, for a time-domain continuous first time window, the performance evaluation result is fed back after the first time window ends.

In an embodiment, the terminal may feedback the performance evaluation result to the network side. In case of using Method 2 or Method 3, the performance evaluation result fed back from the terminal to the network side may include one or more of following.
(1) The input corresponding to the model or function in the set of models or functions to be evaluated

For example, it may be the input of the AI/ML model or function to be evaluated, which may be used by the NW side for performance monitoring and subsequent decision-making.

In an embodiment, the network side may extract the input distribution characteristic information corresponding to the model or function in the set of models or functions to be evaluated based on the input corresponding to the model or function in the set of models or functions to be evaluated, and perform subsequent evaluation.

(2) The input distribution characteristic information corresponding to the model or function in the set of models or functions to be evaluated

For example, the characteristic information of the input of the AI/ML model or function to be evaluated, which may be used by the NW side for performance monitoring and subsequent decision-making.

(3) The characteristic offset information, of the input distribution characteristic corresponding to the model or function in the set of models or functions to be evaluated, relative to the reference input distribution characteristic

In an embodiment, the characteristic offset information may be used by the NW side for performance monitoring and subsequent decision-making.

(4) The application condition corresponding to the model or function in the set of models or functions to be evaluated, such as the current application condition

For example, it may be the information of applicability of the AI/ML model or function to be evaluated under the current application condition, which may be used by the NW side for performance monitoring and subsequent decision-making.

(5) The information of applicability of the model or function in the set of models or functions to be evaluated to the condition where the terminal is located

In an embodiment, the information of applicability is determined based on the condition where the terminal is located and the application condition corresponding to the model or function.

In an embodiment, the characteristic offset information may be used by the NW side for performance monitoring and subsequent decision-making.

In an embodiment, the information of applicability may be determination information only including "yes" and "no", or determination information including multiple available values. For example, it may be multiple reportable values, such as {0, 0.1, 0.2, 0.3...1}, in the interval from 0 to 1 with an interval of 0.1, where a value closer to 1 indicates higher applicability and better performance.

(6) The suggestion proposed by the terminal to the network device based on the input or application condition of the model or function to be evaluated

For example, the terminal may suggest the network side to activate another model or function, based on the input characteristic information of the model or function or the matching degree between the current condition and the application condition of the model or function, or provide ranking information of the models or functions to be evaluated in descending order of preference.

(7) The model or function that the terminal expects to activate, or the model or function that the terminal does not expect to activate

In an embodiment, the model or function that the terminal expects to activate or the model or function that the terminal does not expect to activate is determined based on the input distribution characteristic offset and/or application condition corresponding to the model or function in the set of models or functions to be evaluated.

For example, whether to activate other AI/ML models or functions, or the ranking of the preferred AI/ML models or functions to be activated.

(8) The model or function management information of the terminal, where the model or function management information is used to represent that the terminal performs model or function management based on the input distribution characteristic and/or application condition corresponding to the model or function in the set of models or functions to be evaluated, and the model or function management includes at least one of following: model or function activation processing, model or function switching processing, model or function update processing, or fallback processing.

In an embodiment, the model or function activation processing includes model or function activation, or model or function deactivation.

In an embodiment, the model or function switching processing includes model or function switching, or model or function non-switching.

In an embodiment, the model or function update processing includes model or function update, or model or function non-update.

In an embodiment, the fallback processing includes fallback or non-fallback.

For example, the terminal performs switching (or non-switching), fallback (or non-fallback), activation (or non-activation), or update (or non-update) of the AI/ML model or function based on the input or application condition of the AI/ML model or function to be evaluated, and feeds back the execution information of the UE, i.e., model or function management information, to the base station.

In an embodiment, the terminal may perform management of the AI/ML model or function, such as model or function switching, fallback, update, etc., based on the performance evaluation result of the AI/ML model or function to be evaluated, and report the result to the NW.

For example, in case that the double-sided AI/ML model or function is used for channel compression and decompression, the UE side decides to switch the UE-side model or function from model or function 1 to model or function 2 and reports it to the NW. The NW may also perform corresponding operations on the NW-side model or function, such as switching the NW-side model or function to match the newly switched model or function on the UE side, or determining that there is no need to switch the model or function.

In an embodiment, the performance evaluation result obtained by Method 3 may include any one of following:
the evaluation result of the subset of models or functions through Method 1;
the evaluation result of the subset of models or functions through Method 1, and the evaluation result of the set of models or functions to be evaluated through Method 2; or
the evaluation result of the subset of models or functions through Method 1, and the evaluation result of the remaining M-M' AI/ML models or functions, in the set of models or functions to be evaluated that are not evaluated through Method 1, but through Method 2.

In an embodiment, the method further includes:
transmitting configuration information or indication information to the terminal, where the configuration information or indication information is used to configure a first time window.

In an embodiment, the first time window is a continuous time window, or the first time window includes multiple non-overlapping sub-time windows.

In an embodiment, the first time window may be continuous or discontinuous in the time domain.

In an embodiment, a discontinuous first time window may include multiple sub-time windows.

In an embodiment, the discontinuous first time window may include multiple sub-time windows, and the multiple sub-time windows do not overlap with each other in the time domain.

In an embodiment, the discontinuous first time window may include multiple sub-time windows, and the multiple sub-time windows may appear periodically.

FIG. 3 is a first schematic diagram of a first time window according to an embodiment of the present application. As shown in FIG. 3, the first time window may be continuous in the time domain. Method 1 is used for monitoring models or functions on 3 AI/ML models or functions (model or function 1, model or function 2, and model or function 3) on the UE side, that is, model or function 1, model or function 2, and model or function 3 are activated in turn within the first time window.

In an embodiment, "loading" in the embodiments of the present application may also be considered as "activating". Assuming that the model or function 1 is activated by the UE at the beginning, the model or function 1 may not need to be "loaded". In case that the model or function 1 is not activated by the UE at the beginning, the model or function 1 also need to be loaded.

In an embodiment, in FIG. 3, the UE may only activate one AI/ML model or function at a time, which is only an implementable example and does not mean that the UE may only activate one AI/ML model or function at a time in the embodiments of the present application.

For example, in case that the number of models or functions N activated by the terminal at the same time is greater than 1, the terminal may activate different combinations of models or functions in turn (for example, activating {model or function 1, model or function 2} at time 1, activating {model or function 3, model or function 4} at time 2...); or, the terminal may at least ensure the use of the currently activated AI/ML model or function (such as AI/ML model or function 1) and activate other AI/ML models or functions in turn. Each time, in addition to the currently activated model or function 1, the terminal may also activate another N-1 models or functions at the same time (for example, activating {model or function 1, model or function 2} at time 1, activating {model or function 1, model or function 3} at time 2, activating {model or function 1, model or function 4} at time 3...).

FIG. 4 is a second schematic diagram of a first time window according to an embodiment of the present application. As shown in FIG. 4, assuming that the first time window includes 3 sub-time windows, one or more models or functions may be activated in each sub-time window.

In an embodiment, in case that the first time window includes multiple sub-time windows, the length of each sub-time window may be determined by a method similar to that used to determine the length of the time-domain continuous first time window, such as determined by predefinition, determined based on instructions or configurations from the network side, determined by the terminal and then informed to the network side, implicitly indicated by indicating the end time of each sub-time window, or determined by indicating the time offset of the start time of each sub-time window relative to the end time of the previous sub-time window (one or more of the start time of the first sub-time window, the end time of the first sub-time window, or the length of each sub-time window is simultaneously indicated).

In an embodiment, the length of each sub-time window may also be calculated in a T/K manner, where K is a number of sub-time windows, and the start position of each sub-time window may be determined based on an indicated offset value of the start of each sub-time window relative to the start of the first time window, or may be determined based on an offset value of the start of the first sub-time window relative to the start of the first time window and an offset between each sub-time window.

In an embodiment, the length of each sub-time window may also be indicated by other manners. Any way that may determine the time-domain position of each sub-time window is applicable to the embodiments of the present application, which is not limited here.

In an embodiment, the first time window is a periodic time window or a time window triggered based on an instruction from the network side.

In an embodiment, the first time window is a periodic time window.

In an embodiment, the network side may configure the first time window as a periodic time window through semi-static configuration, for example, starting the first time window every 50 ms.

In an embodiment, the first time window is a time window triggered by dynamic signaling.

In an embodiment, the network side may indicate the terminal to start the first time window through dynamic signaling.

In an embodiment, the start time of the first time window may be periodic or dynamically indicated by the network side.

In an embodiment, for a periodic first time window, the network side may configure the cycle period of the first time window and the start position within each period, where the start position is the offset value between the start of the first time window and the start of its period. The unit of the period and start position may be frame, subframe, slot, symbol, etc., or other units.

In an embodiment, for the first time window triggered by dynamic indication, the network side may trigger the terminal to perform model or function monitoring, that is, start the first time window, by transmitting dynamic signaling (such as downlink control information (DCI) and media access control-control element (MAC-CE)).

In an embodiment, a length of the first time window is determined based on a predefined fixed duration, or determined based on configuration information or indication information from the network side, or determined by the terminal, or determined based on predefined first information.
where the first information includes one or more of following: a number of models or functions in the set of models or functions to be evaluated, a number of models or functions simultaneously activated by the terminal, a number of models or functions remaining activated, or a duration from activating any model or function in the set of models or functions to be evaluated to obtaining the output of the model or function.

In an embodiment, the length of the first time window may be determined by the terminal and then reported to the network side.

In an embodiment, the length of the first time window may be configured or indicated to the terminal by the network side.

In an embodiment, the length of the first time window may be determined based on a predefined manner.

In an embodiment, predefining the length of the first time window may include predefining one or more of following:
predefining a fixed time length, for example, the predefined fixed time length is 1000 milliseconds; or
determining the length of the first time window based on at least one of the first information, where the first information includes one or more of following:
   the number of models or functions in the set of models or functions to be evaluated, such as the number of AI/ML models or functions to be evaluated;
   the number of models or functions activated by the terminal at the same time, such as the number of AI/ML models or functions that the terminal may activate at the same time;
   the number of models or functions remaining activated, such as the number of AI/ML models or functions that must remain activated all the time; or
   the time length from activating any model or function in the set of models or functions to be evaluated to obtaining the output of the model or function, such as the time length for activating and using the AI/ML model or function for inference once.

In an embodiment, the length of the first time window may be T.

In an embodiment, the length T of the first time window may be determined by the terminal itself and then reported to the network side.

In an embodiment, the length T of the first time window may be configured or indicated by the network side.

In an embodiment, the length T of the first time window may be determined based on a predefined manner.

In an embodiment, in addition to directly configuring the length of the first time window through the time length T, it may also be implicitly indicated by indicating the end time of the first time window. In this case, the difference between the end time and the start time is the length of the first time window.

In an embodiment, in case that the terminal reports the length of the first time window, the terminal may report an appropriate time length to ensure that the evaluation of the models or functions to be evaluated is completed within the first time window.

In an embodiment, in case that the network side configures or indicates the length of the first time window, the network side may semi-statically configure through higher-layer signaling or indicate the length of the first time window to the terminal through dynamic signaling.

In an embodiment, the network side may configure or indicate a reasonable length of the first time window based on the capabilities reported by the terminal, such as one or more of the number of sets of AI/ML models or functions to be evaluated, the number of AI/ML models or functions that the terminal may use at the same time, or the time required for the terminal to activate the AI/ML models or functions, and the terminal may complete the evaluation of the AI/ML models or functions to be evaluated within the length of the first time window.

In an embodiment, the length T of the first time window may be determined by a predefined method. For example, the length of the first time window may be determined as ceil(M/N) * t based on one or more of the number M of AI/ML models or functions to be evaluated, the number N of AI/ML models or functions that the terminal may activate at the same time, or the time length t for activating and using the AI/ML models or functions for inference, where ceil(x) represents rounding up x. In case that the terminal does not report the above parameters or the network side does not configure the above parameters, a default value may be used by agreement, for example, the default value of the number N of AI/ML models or functions that may be activated at the same time is N_default, and N_default = 1.

In an embodiment, assuming that the number N of AI/ML models or functions that the terminal may activate at the same time is greater than 1 and the terminal always ensures that the currently activated AI/ML model or function is available (for example, in case that the terminal needs to activate model or function 1 at any time, {model or function 1, model or function 2} may be activated in the first sub-window, or {model or function 1, model or function 3} may be activated in the second sub-window...), the length of the first time window may be ceil(M/(N-1)) * t.

In related art, limited by factors such as power consumption and computing capability, the number of AI/ML models or functions that a UE may activate and use at the same time may be very limited. In a typical case, UE may only activate one AI/ML model or function at a time and cannot use multiple AI/ML models or functions for inference at the same time. In the embodiments of the present application, multiple models or functions on the terminal side may be activated for inference, which may more effectively evaluate the models or functions deployed on the terminal side, obtain more appropriate evaluation results, and further improve the communication performance of the terminal.

In an embodiment, the lengths of the first time windows for obtaining different performance evaluation results (such as inference accuracy, system performance, or input offset) may be the same or different. In case of the same lengths, the network side may only configure one length of the first time window; in the case of different lengths, the network side may configure multiple sets of different parameters for the terminal, corresponding to the lengths of the first time windows for obtaining different performance evaluation results. The terminal may use configurations of different lengths of the first time windows based on specific model or function monitoring methods.

In an embodiment, the method further includes:
receiving first indication information transmitted from the terminal, where the first indication information is used to indicate a duration of a first time window determined by the terminal.

In an embodiment, the length of the first time window may be determined by the terminal itself and informed to the network side through the first indication information.

In an embodiment, the method further includes:
transmitting second indication information to the terminal, where the second indication information is used to indicate the set of models or functions to be evaluated.

In an embodiment, in case that the terminal determines the set of models or functions to be evaluated, it may be determined by the terminal itself.

In an embodiment, in case that the terminal determines the set of models or functions to be evaluated, it may be determined based on the indication from the network side.

In an embodiment, the set of models or functions to be evaluated may be indicated by the network side, and the network side may know which specific models or functions the terminal side have.

For example, the models or functions of the terminal are configured/transmitted from the network side.

For example, the terminal reports to the network side which models or functions it has through model or function identification. The network side may indicate the set of models or functions to be evaluated to the terminal through higher-layer signaling (such as RRC signaling) or dynamic signaling, for example, indicating an index or model/function ID of the models or functions to be evaluated.

In an embodiment, the set of models or functions to be evaluated may be determined by the terminal itself. For example, the terminal has multiple models or functions and selects to evaluate a part of the models or functions. The terminal does not need to report each of its models or functions to the NW. The terminal may report the set of models or functions to be evaluated to the network side, for example, reporting the index or model/function ID of the models or functions to be evaluated, and the network side participates in the lifecycle management of the model or function of the terminal.

In an embodiment, the method further includes:
receiving third indication information transmitted from the terminal, where the third indication information is used to indicate the set of models or functions to be evaluated determined by the terminal.

In an embodiment, after determining the model or function set to be evaluated, the terminal may transmit the third indication information to the network side, and inform a determined result to the network side.

In an embodiment, receiving the performance evaluation result transmitted from the terminal includes:
receiving, after the first time window ends, the performance evaluation result corresponding to a model or function activated within the first time window; or
receiving, within the first time window, a performance evaluation result corresponding to a model or function activated before the first time window.

In an embodiment, the terminal may report, within the first time window, the performance evaluation result of the model or function activated before the first time window.

For example, the terminal may report, within the first time window, the inference result or performance evaluation result of the activated AI/ML model or function before the first time window.

In an embodiment, the terminal may report, within the first time window, the performance evaluation result of the model or function activated in the time before the first time window.

In an embodiment, the terminal may report, within the first time window, the performance evaluation result of the model or function activated in the time before the first time window and closest to the first time window.

For example, the terminal may report, within the first time window, the inference result or performance evaluation result of the AI/ML model or function activated in the time before the first time window and closest to the first time window.

In an embodiment, as shown in FIG. 3, for a time-domain continuous first time window, the terminal may feedback the performance evaluation result after the first time window ends.

In an embodiment, the time interval between the time when the terminal feeds back the performance evaluation result and the end time of the first time window may be configured or indicated by the network side, or predefined.

In an embodiment, as shown in FIG. 4, for a time-domain discontinuous first time window (including multiple sub-time windows), the terminal may feedback the performance evaluation result after the first time window ends, similar to the time-domain continuous case.

In an embodiment, FIG. 5 is a third schematic diagram of a first time window according to an embodiment of the present application. As shown in FIG. 5, for a time-domain discontinuous first time window (including multiple sub-time windows), the terminal may feedback the monitoring result of the model or function activated within the current sub-time window after each sub-time window, and the relationship between each sub-time window and the feedback timing is similar to the time-domain continuous case.

In an embodiment, the method further includes:
not receiving, within the first time window, a performance evaluation result corresponding to a model or function activated within the first time window;
not receiving the performance evaluation result within the first time window;

In an embodiment, the terminal may not report the inference result or performance evaluation result corresponding to any model or function in the set of models or functions to be evaluated.

In an embodiment, the terminal may not report, within the first time window, the inference result or performance evaluation result corresponding to the model or function activated within the first time window.

In an embodiment, the terminal may not report the performance evaluation result corresponding to any model or function in the set of models or functions to be evaluated.

In an embodiment, the terminal may not report, within the first time window, the performance evaluation result corresponding to the model or function activated within the first time window.

For example, the UE does not report, within the first time window, the inference result or performance evaluation result of the AI/ML model or function to be evaluated within the first time window, including one or more of following situations:
the terminal does not report the inference result or performance evaluation result of the AI/ML model or function configured semi-statically by the network side, and does not report the inference result or performance evaluation result of the AI/ML model or function dynamically indicated by the NW; or
the terminal does not expect the network side to semi-statically configure to report the AI/ML inference result or performance evaluation result within the first time window, and does not expect the network side to dynamically indicate the UE to report the AI/ML inference result or performance evaluation result within the first time window.

In an embodiment, in case that the terminal activates the AI/ML models or functions to be evaluated in turn, at a specific moment within the first time window, the terminal may not be able to use the data at the specific moment as input to a specific AI/ML model or function and to obtain the corresponding output through inference. Then the terminal may not report, within the first time window, the inference result or performance evaluation result of the AI/ML model or function to be evaluated within the first time window, and the terminal may reasonably plan the computing, storage, and energy consumption resources allocated to AI/ML model or function monitoring.

For example, in FIG. 4, the UE cannot perform inference using AI/ML model or function 1 in sub-time window 2.

For example, the terminal may not report the inference result or performance evaluation result of the model or function semi-statically configured by the network side, and may not report the inference result or performance evaluation result of the model or function dynamically indicated by the network side.

For example, the network side may configure or indicate the terminal to perform model or function inference and reporting within the first time window. However, even if configured or indicated by the network side, the terminal may not perform reporting.

For example, the terminal may not expect the network side to semi-statically configure to report inference result or performance evaluation result within the first time window, and may not expect the network side to dynamically indicate the terminal to report inference result or performance evaluation result within the first time window.

For example, the network side may not configure or indicate the terminal to perform model or function inference and reporting within the first time window.

In an embodiment, using method 1 for the model or function evaluation specifically includes following steps.

Step 1: determining the set of models or functions to be evaluated.

In an embodiment, the set of models or functions to be evaluated is an entire set of all models or functions deployed on the terminal, or a subset of the entire set of all models or functions deployed on the terminal.

In an embodiment, the set of models or functions to be evaluated includes one model or function, or includes two models or functions, or includes P models or functions, where P is an integer greater than or equal to 1 and less than a number of all models or functions deployed on the terminal.

In an embodiment, the model or function to be evaluated includes a currently activated AI/ML model or function.

In an embodiment, the model or function to be evaluated must include the currently activated AI/ML model or function, for example, the performance of currently activated AI/ML model or function is always monitored.

In an embodiment, the model or function to be evaluated does not include the currently activated AI/ML model or function.

In an embodiment, the model or function to be evaluated must not include the currently activated AI/ML model or function, for example, the performance of a currently inactivated AI/ML model or function is always monitored.

In an embodiment, the model or function to be evaluated must include the currently activated AI/ML model or function and must include at least one currently inactivated AI/ML model or function to ensure that the performance of the activated AI/ML model or function and the performance of the inactivated AI/ML model or function are always compared to allow the UE or NW to determine whether to switch the AI/ML model or function.

In an embodiment, the set of models or functions to be evaluated may be indicated by the network side, and the network side may know which specific models or functions the terminal side have.

For example, the models or functions of the terminal are configured/transmitted from the network side.

For example, the terminal reports to the network side which models or functions it has through model or function identification. The network side may indicate the set of models or functions to be evaluated to the terminal through higher-layer signaling (such as RRC signaling) or dynamic signaling, for example, indicating an index or model/function ID of the models or functions to be evaluated.

In an embodiment, the set of models or functions to be evaluated may be determined by the terminal itself. For example, the terminal has multiple models or functions and selects to evaluate a part of the models or functions. The terminal does not need to report each of its models or functions to the NW. The terminal may report the set of models or functions to be evaluated to the network side, for example, reporting the index or model/function ID of the models or functions to be evaluated, and the network side participates in the lifecycle management of the model or function of the terminal.

Step 2: determining the first time window; the UE evaluates and monitors the AI/ML model or function in the set of AI/ML model or function to be evaluated within the first time window.

It should be noted that there is no definite sequence between the Step 1 and the Step 2, for example, the Step 1 and the Step 2 may occur simultaneously, or the Step 2 precedes the Step 1.

In an embodiment, the start time of the first time window may be periodic or dynamically indicated by the network side.

In an embodiment, for a periodic first time window, the network side may configure the cycle period of the first time window and the start position within each period, where the start position is the offset value between the start of the first time window and the start of its period. The unit of the period and start position may be frame, subframe, slot, symbol, etc., or other units.

In an embodiment, for the first time window triggered by dynamic indication, the network side may trigger the terminal to perform model or function monitoring, that is, start the first time window, by transmitting dynamic signaling (such as downlink control information (DCI) and media access control-control element (MAC-CE)).

In an embodiment, the length of the first time window may be T.

In an embodiment, the length T of the first time window may be determined by the terminal itself and then reported to the network side.

In an embodiment, the length T of the first time window may be configured or indicated by the network side.

In an embodiment, the length T of the first time window may be determined based on a predefined manner.

In an embodiment, in case that the terminal reports the length of the first time window, the terminal may report an appropriate time length to ensure that the evaluation of the models or functions to be evaluated is completed within the first time window.

In an embodiment, in case that the network side configures or indicates the length of the first time window, the network side may semi-statically configure through higher-layer signaling or indicate the length of the first time window to the terminal through dynamic signaling.

In an embodiment, the network side may configure or indicate a reasonable length of the first time window based on the capabilities reported by the terminal, such as one or more of the number of sets of AI/ML models or functions to be evaluated, the number of AI/ML models or functions that the terminal may use at the same time, or the time required for the terminal to activate the AI/ML models or functions, and the terminal may complete the evaluation of the AI/ML models or functions to be evaluated within the length of the first time window.

In an embodiment, the length T of the first time window may be determined by a predefined method. For example, the length of the first time window may be determined as ceil(M/N) * t based on one or more of the number M of AI/ML models or functions to be evaluated, the number N of AI/ML models or functions that the terminal may activate at the same time, and the time length t for activating and using the AI/ML models or functions for inference, where ceil(x) represents rounding up x. In case that the terminal does not report the above parameters or the network side does not configure the above parameters, a default value may be used by agreement, for example, the default value of the number N of AI/ML models or functions that may be activated at the same time is N_default, and N_default = 1.

In an embodiment, assuming that the number N of AI/ML models or functions that the terminal may activate at the same time is greater than 1 and the terminal always ensures that the currently activated AI/ML model or function is available (for example, in case that the terminal needs to activate model or function 1 at any time, {model or function 1, model or function 2} may be activated in the first sub-window, or {model or function 1, model or function 3} may be activated in the second sub-window...), the length of the first time window may be ceil(M/(N-1)) * t.

In an embodiment, the first time window may be continuous in the time domain as shown in FIG. 3, or discontinuous in the time domain as shown in FIG. 4.

In an embodiment, in case that the first time window includes multiple sub-time windows, the length of each sub-time window may be determined by a method similar to that used to determine the length of the time-domain continuous first time window, such as determined by predefinition, determined based on instructions or configurations from the network side, determined by the terminal and then informed to the network side, implicitly indicated by indicating the end time of each sub-time window, or determined by indicating the time offset of the start time of each sub-time window relative to the end time of the previous sub-time window (one or more of the start time of the first sub-time window, the end time of the first sub-time window, or the length of each sub-time window is simultaneously indicated).

In an embodiment, the length of each sub-time window may also be calculated in a T/K manner, where K is a number of sub-time windows, and the start position of each sub-time window may be determined based on an indicated offset value of the start of each sub-time window relative to the start of the first time window, or may be determined based on an offset value of the start of the first sub-time window relative to the start of the first time window and an offset between each sub-time window.

In an embodiment, the length of each sub-time window may also be indicated by other manners. Any way that may determine the time-domain position of each sub-time window is applicable to the embodiments of the present application, which is not limited here.

In an embodiment, in addition to directly configuring the length of the first time window through the time length T, it may also be implicitly indicated by indicating the end time of the first time window. In this case, the difference between the end time and the start time is the length of the first time window.

In an embodiment, the lengths of the first time windows for obtaining different performance evaluation results (such as inference accuracy, system performance, or input offset) may be the same or different. In case of the same lengths, the network side may only configure one length of the first time window; in the case of different lengths, the network side may configure multiple sets of different parameters for the terminal, corresponding to the lengths of the first time windows for obtaining different performance evaluation results. The terminal may use configurations of different lengths of the first time windows based on specific model or function monitoring methods.

Step3: evaluating the performance of the AI/ML model or function to be evaluated within the first time window.

In an embodiment, in case that the terminal activates at least one model or function within the first time window, it may activate at least one model or function to be evaluated in turn and use the activated model or function for inference, where the order in which the terminal activates the at least one model or function to be evaluated may be determined by the terminal itself. The terminal may inform the network side or not inform the network side, or the order may be indicated by the network side.

In an embodiment, in case that the terminal activates the AI/ML models or functions to be evaluated in turn, at a specific moment within the first time window, the terminal may not be able to use the data at the specific moment as input to a specific AI/ML model or function and to obtain the corresponding output through inference. Then the terminal may not report, within the first time window, the inference result or performance evaluation result of the AI/ML model or function to be evaluated within the first time window, and the terminal may reasonably plan the computing, storage, and energy consumption resources allocated to AI/ML model or function monitoring.

For example, in FIG. 4, the UE cannot perform inference using AI/ML model or function 1 in sub-time window 2.

For example, the terminal may not report the inference result or performance evaluation result of the model or function semi-statically configured by the network side, and may not report the inference result or performance evaluation result of the model or function dynamically indicated by the network side.

For example, the network side may configure or indicate the terminal to perform model or function inference and reporting within the first time window. However, even if configured or indicated by the network side, the terminal may not perform reporting.

For example, the terminal may not expect the network side to semi-statically configure to report inference result or performance evaluation result within the first time window, and may not expect the network side to dynamically indicate the terminal to report inference result or performance evaluation result within the first time window.

For example, the network side may not configure or indicate the terminal to perform model or function inference and reporting within the first time window.

In an embodiment, the terminal may report, within the first time window, the inference result or performance evaluation result of the activated AI/ML model or function before the first time window.

In an embodiment, the network side may configure or indicate the terminal to perform model or function inference and reporting within the first time window. However, what the terminal reports is not the result of model or function inference performed within the first time window, but the result before the first time window.

In an embodiment, the terminal may report, within the first time window, the inference result or performance evaluation result of the AI/ML model or function activated in the time before the first time window and closest to the first time window, so that the NW may obtain the inference result of the AI/ML model or function before the first time window. Although the inference result or performance evaluation result within the first time window cannot be known for sure, the inference result or performance evaluation result before the first time window may also have certain reference value, Especially in case that the movement speed of the terminal is not large and the change of the network environment is not large, the two inference results or performance evaluation results may not differ much, and the network side may optimize the network and improve network performance accordingly.

It should be noted that the above constraints are optional, and are particularly applicable to the case that the AI/ML model or the function number N activated by the UE may only be 1. For example, in case that the number of models or functions N activated by the terminal at the same time is greater than 1, the terminal may activate different combinations of models or functions in turn (for example, activating {model or function 1, model or function 2} at time 1, activating {model or function 3, model or function 4} at time 2...); or, the terminal may at least ensure the use of the currently activated AI/ML model or function (such as AI/ML model or function 1) and activate other AI/ML models or functions in turn. Each time, in addition to the currently activated model or function 1, the terminal may also activate another N-1 models or functions at the same time (for example, activating {model or function 1, model or function 2} at time 1, activating {model or function 1, model or function 3} at time 2, activating {model or function 1, model or function 4} at time 3...). The above constraints are not necessary in this case, but applying the constraints may shorten the time of AI/ML model or function monitoring.

Step 4: reporting the model or function monitoring result by the terminal to the NW.

In an embodiment, as shown in FIG. 3, for a time-domain continuous first time window, the terminal may feedback the performance evaluation result after the first time window ends.

In an embodiment, the time interval between the time when the terminal feeds back the performance evaluation result and the end time of the first time window may be configured or indicated by the network side, or predefined.

In an embodiment, as shown in FIG. 4, for a time-domain discontinuous first time window (including multiple sub-time windows), the terminal may feedback the performance evaluation result after the first time window ends, similar to the time-domain continuous case.

In an embodiment, FIG. 5 is a third schematic diagram of a first time window according to an embodiment of the present application. As shown in FIG. 5, for a time-domain discontinuous first time window (including multiple sub-time windows), the terminal may feedback the monitoring result of the model or function activated within the current sub-time window after each sub-time window, and the relationship between each sub-time window and the feedback timing is similar to the time-domain continuous case.

In an embodiment, the terminal may feedback the performance evaluation result to the network side. In case of using Method 1 or Method 3, the performance evaluation result fed back from the terminal to the network side may include one or more of following.
(1) The output of the at least one model or function

For example, it may be the inference result of the AI/ML model or function to be evaluated, which may be used by the network side to perform performance monitoring and subsequent decision-making based on the output of the at least one model or function.

(2) The accuracy evaluation result of the output of the at least one model or function

For example, it may be the measurement result (measurement of accuracy) of the inference result of the AI/ML model or function to be evaluated, which may be used by the terminal to perform performance monitoring and subsequent decision-making based on the accuracy evaluation result of the output of the at least one model or function.

(3) The system performance evaluation result after applying the output of the at least one model or function to a communication system

For example, it may be the measurement result (measurement of system performance) of the inference result of the AI/ML model or function to be evaluated.

In an embodiment, the system performance may be, for example, bit error rate, block error rate, throughput, etc.

(4) The output distribution characteristic information of the at least one model or function

For example, it may be the distribution characteristic of the output of the AI/ML model or function to be evaluated, such as the distribution area of an output positioning position.

(5) The offset information of the output distribution characteristic, of the at least one model or function, relative to the reference output distribution characteristic

For example, it may be the offset of the output distribution characteristic of the AI/ML model or function to be evaluated compared with the reference output distribution characteristic, such as a coordinate offset of the output positioning position relative to a reference position.

(6) Suggestion information proposed by the terminal to the network device based on the inference result of the model or function to be evaluated

For example, the terminal suggests the NW to activate another model or function, based on the accuracy of the inference result of the AI/ML model or function or the system performance after applying the inference result of the AI/ML model or function to the communication system, or provides ranking information of the AI/ML models or functions to be evaluated in descending order of preference.

In an embodiment, the suggestion information may be used for performance monitoring on the UE side and subsequent decision-making on the NW side.
(7) The model or function that the terminal expects to activate, or the model or function that the terminal does not expect to activate, where the model or function that the terminal expects to activate or the model or function that the terminal does not expect to activate is determined based on the output of the at least one model or function, such as whether to activate other AI/ML models or functions, or the ranking of the preferred AI/ML models or functions to be activated.
(8) The model or function management information of the terminal, where the model or function management information is used to represent that the terminal performs model or function management based on the output of the at least one model or function, and the model or function management includes at least one of following: model or function activation processing, model or function switching processing, model or function update processing, or fallback processing.

In an embodiment, the model or function activation processing includes model or function activation, or model or function deactivation.

In an embodiment, the model or function switching processing includes model or function switching, or model or function non-switching.

In an embodiment, the model or function update processing includes model or function update, or model or function non-update.

In an embodiment, the fallback processing includes fallback or non-fallback.

For example, the terminal performs switching (or non-switching), fallback (or non-fallback), activation (or non-activation), or update (or non-update) of the AI/ML model or function based on the inference result of the AI/ML model or function to be evaluated, and feeds back the execution information of the UE, i.e., model or function management information, to the base station.

In an embodiment, the UE performs management of the AI/ML model or function, such as model or function switching, fallback, update, etc., based on the performance evaluation result of the AI/ML model or function to be evaluated, and reports the result to the NW. For example, in case that the double-sided AI/ML model or function is used for channel compression and decompression, the UE side decides to switch the UE-side model or function from model or function 1 to model or function 2 and reports it to the NW. The NW may also perform corresponding operations on the NW-side model or function, such as switching the NW-side model or function to match the newly switched model or function on the UE side, or determining that there is no need to switch the model or function.

In an embodiment, the model or function management information of the terminal may be used for performance monitoring on the UE side and subsequent decision-making on the UE side.

According to the method in the embodiments of the present application, performance monitoring may be performed on the AI/ML model or function on the UE side through Method 1. In Method 1, the AI/ML model or function to be evaluated is used for inference, so that the performance of the AI/ML model or function may be evaluated highly accurately, and the UE or the NW may perform appropriate model or function lifecycle management based on the accurate performance evaluation result of the AI/ML model or function, thereby ensuring the communication performance of the UE and the NW to the maximum extent.

In an embodiment, the terminal may perform model or function evaluation by Method 2. FIG. 7 is a schematic diagram of a model or function evaluation according to an embodiment of the present application. As shown in FIG. 7, Method 2 does not need to use the AI/ML model or function to be evaluated to perform inference, and the UE may evaluate the performance/validity/applicability of the AI/ML model or function in the current communication environment without activating or loading the AI/ML model or function to be evaluated. A process of performing model or function monitoring on three AI/ML models or functions (models or functions 1, models or functions 2, or, models or functions 3) on the UE side may include following steps.

Step 1: determining the set of models or functions to be evaluated.

In an embodiment, the set of models or functions to be evaluated is an entire set of all models or functions deployed on the terminal, or a subset of the entire set of all models or functions deployed on the terminal.

In an embodiment, the set of models or functions to be evaluated includes one model or function, or includes two models or functions, or includes P models or functions, where P is an integer greater than or equal to 1 and less than a number of all models or functions deployed on the terminal.

In an embodiment, the model or function to be evaluated includes a currently activated AI/ML model or function.

In an embodiment, the model or function to be evaluated must include the currently activated AI/ML model or function, for example, the performance of currently activated AI/ML model or function is always monitored.

In an embodiment, the model or function to be evaluated does not include the currently activated AI/ML model or function.

In an embodiment, the model or function to be evaluated must not include the currently activated AI/ML model or function, for example, the performance of a currently inactivated AI/ML model or function is always monitored.

In an embodiment, the model or function to be evaluated must include the currently activated AI/ML model or function and must include at least one currently inactivated AI/ML model or function to ensure that the performance of the activated AI/ML model or function and the performance of the inactivated AI/ML model or function are always compared to allow the UE or NW to determine whether to switch the AI/ML model or function.

In an embodiment, the set of models or functions to be evaluated may be indicated by the network side, and the network side may know which specific models or functions the terminal side have.

For example, the models or functions of the terminal are configured/transmitted from the network side.

For example, the terminal reports to the network side which models or functions it has through model or function identification. The network side may indicate the set of models or functions to be evaluated to the terminal through higher-layer signaling (such as RRC signaling) or dynamic signaling, for example, indicating an index or model/function ID of the models or functions to be evaluated.

In an embodiment, the set of models or functions to be evaluated may be determined by the terminal itself. For example, the terminal has multiple models or functions and selects to evaluate a part of the models or functions. The terminal does not need to report each of its models or functions to the NW. The terminal may report the set of models or functions to be evaluated to the network side, for example, reporting the index or model/function ID of the models or functions to be evaluated, and the network side participates in the lifecycle management of the model or function of the terminal.

Step 2: evaluating the performance of the AI/ML model or function to be evaluated.

In an embodiment, in case of using Method 2 for model or function evaluation, the terminal does not need to activate the AI/ML model or function to be evaluated. Since the AI/ML model or function to be evaluated does not need to be activated in turn, the UE may complete the evaluation within a very short time, and the first time window may not need to be configured.

In an embodiment, the input distribution characteristic may include any signal or channel involved in the communication process, any parameter representing the signal, channel, transmission quality, etc. involved in the communication process, or part or all of the model or function information, which is not limited in the embodiments of the present application.

In an embodiment, the terminal may evaluate and measure the offset between characteristics by comparing the input distribution characteristic used in training a certain model or function (such as the Doppler delay spread of a signal) with the same type of characteristic of the currently measured radio channel, to evaluate the performance of the model or function. In case that the offset is less than a certain threshold, it is estimated that the performance of the model or function is good. In case that the offset exceeds the certain threshold, it is estimated that the model or function is no longer applicable to the current environment.

In an embodiment, in case of evaluating the performance of the model or function based on the offset, the threshold of the offset may be configured or indicated by the network side, determined by the terminal itself, or predefined.

In an embodiment, for AI/ML models or functions with different functions, the input distribution characteristics and/or application conditions that need to be monitored may be different.

For example, the AI/ML model or function used for beam management may need to monitor the RSRP distribution of each beam.

For example, the AI/ML model or function used for positioning may need to monitor the strength and time of the main path or secondary path of the channel impulse response.

In an embodiment, the characteristics that a model or function needs to monitor are part of the model or function information. The application condition of a model or function may be provided or indicated by the trainer, provider, or transmitter of the model or function.

In an embodiment, the application condition of the model or function may be configured or indicated by the network side, or determined by the terminal itself.

For example, the performance of the AI/ML model or function may be evaluated by comparing the application condition of a certain AI/ML model or function with the condition of the current environment. In case that the application condition of the AI/ML model or function is the same as or similar to the condition of the current environment, such as both being outdoor scenarios, both being scenarios with dense obstacles, or both being high-speed moving scenarios, etc., it is estimated that the performance of the AI/ML model or function is good. Conversely, in case that the application condition of the AI/ML model or function is opposite to or significantly different from the condition of the current environment, such as one application condition being outdoor and the other being indoor, one application condition being dense obstacles and the other being sparse obstacles, one application condition being high-speed movement and the other being low-speed movement, it may be estimated that the performance of the AI/ML model or function is poor.

Step 3: reporting the model or function monitoring result by the terminal to the NW.

In an embodiment, the terminal may feed back the result to the network side after the performance evaluation of the model or function.

In an embodiment, a time interval, between the time of the feedback for the terminal and the time of the performance evaluation of the model or function, is configured or indicated by the network side, or is predefined.

In an embodiment, the terminal may feedback the performance evaluation result to the network side. In case of using Method 2 or Method 3, the performance evaluation result fed back from the terminal to the network side may include one or more of following.
(1) The input corresponding to the model or function in the set of models or functions to be evaluated

For example, it may be the input of the AI/ML model or function to be evaluated, which may be used by the NW side for performance monitoring and subsequent decision-making.

In an embodiment, the network side may extract the input distribution characteristic information corresponding to the model or function in the set of models or functions to be evaluated based on the input corresponding to the model or function in the set of models or functions to be evaluated, and perform subsequent evaluation.

(2) The input distribution characteristic information corresponding to the model or function in the set of models or functions to be evaluated

For example, it may be the characteristic information of the input of the AI/ML model or function to be evaluated, which may be used by the NW side for performance monitoring and subsequent decision-making.

(3) The characteristic offset information, of the input distribution characteristic corresponding to the model or function in the set of models or functions to be evaluated, relative to the reference input distribution characteristic

In an embodiment, the characteristic offset information may be used by the NW side for performance monitoring and subsequent decision-making.

(4) The application condition corresponding to the model or function in the set of models or functions to be evaluated, such as the current application condition

For example, it may be the information of applicability of the AI/ML model or function to be evaluated under the current application condition, which may be used by the NW side for performance monitoring and subsequent decision-making.

(5) The information of applicability of the model or function in the set of models or functions to be evaluated to the condition where the terminal is located

In an embodiment, the information of applicability is determined based on the condition where the terminal is located and the application condition corresponding to the model or function.

In an embodiment, the characteristic offset information may be used by the NW side for performance monitoring and subsequent decision-making.

In an embodiment, the information of applicability may be determination information only including "yes" and "no", or determination information including multiple available values. For example, it may be multiple reportable values, such as {0, 0.1, 0.2, 0.3...1}, in the interval from 0 to 1 with an interval of 0.1, where a value closer to 1 indicates higher applicability and better performance.

(6) The suggestion proposed by the terminal to the network device based on the input or application condition of the model or function to be evaluated

For example, the terminal may suggest the network side to activate another model or function, based on the input characteristic information of the model or function or the matching degree between the current condition and the application condition of the model or function, or provide ranking information of the models or functions to be evaluated in descending order of preference.

(7) The model or function that the terminal expects to activate, or the model or function that the terminal does not expect to activate

In an embodiment, the model or function that the terminal expects to activate or the model or function that the terminal does not expect to activate is determined based on the input distribution characteristic offset and/or application condition corresponding to the model or function in the set of models or functions to be evaluated.

For example, whether to activate other AI/ML models or functions, or the ranking of the preferred AI/ML models or functions to be activated.

(8) The model or function management information of the terminal, where the model or function management information is used to represent that the terminal performs model or function management based on the input distribution characteristic and/or application condition corresponding to the model or function in the set of models or functions to be evaluated, and the model or function management includes at least one of following: model or function activation processing, model or function switching processing, model or function update processing, or fallback processing.

In an embodiment, the model or function activation processing includes model or function activation, or model or function deactivation.

In an embodiment, the model or function switching processing includes model or function switching, or model or function non-switching.

In an embodiment, the model or function update processing includes model or function update, or model or function non-update.

In an embodiment, the fallback processing includes fallback or non-fallback.

For example, the terminal performs switching (or non-switching), fallback (or non-fallback), activation (or non-activation), or update (or non-update) of the AI/ML model or function based on the input or application condition of the AI/ML model or function to be evaluated, and feeds back the execution information of the UE, i.e., model or function management information, to the base station.

In an embodiment, the terminal may perform management of the AI/ML model or function, such as model or function switching, fallback, update, etc., based on the performance evaluation result of the AI/ML model or function to be evaluated, and report the result to the NW.

For example, in case that the double-sided AI/ML model or function is used for channel compression and decompression, the UE side decides to switch the UE-side model or function from model or function 1 to model or function 2 and reports it to the NW. The NW may also perform corresponding operations on the NW-side model or function, such as switching the NW-side model or function to match the newly switched model or function on the UE side, or determining that there is no need to switch the model or function.

According to the method in the embodiments of the present application, performance monitoring may be performed on the AI/ML model or function on the UE side through Method 2. According to the method in the embodiments of the present application, the AI/ML model or function to be evaluated does not need to be used for inference, so that a large amount of computing, storage and energy consumption resources of the UE are not consumed, the performance of the AI/ML model or function may be quickly estimated, and the management policy of the AI/ML model or the function may be quickly adjusted by the communication network.

In an embodiment, Method 3 is used to perform model or function evaluation, which may be regarded as a combination of Method 2 and Method 1. Method 1 needs to activate the AI/ML model or function to be evaluated and perform inference, although the accuracy of performance evaluation of the model or function is relatively high, the time is long, and the calculation, storage and energy consumption overhead of the UE are relatively large. Method 2 does not need to activate the AI/ML model or function to be evaluated, and the time is fast, the calculation and storage of the UE and the energy consumption overhead are low, but the accuracy of performance evaluation of the model or function is relatively low. Method 3 is combined with method 1 and method 2 to achieve a good compromise between time, overhead and evaluation accuracy, and includes following steps:
(1) for the set of models or functions to be evaluated, evaluating the performance of M models or functions therein through Method 2, and determining a subset of models or functions including M' models or functions from the set of models or functions to be evaluated; and
(2) for the subset of models or functions, evaluating the performance of the M' AI/ML models or functions through Method 1.

Determining the subset of models or functions from the set of models or functions to be evaluated may preliminarily screen out the models or functions that may be applicable to the current environmental condition, and reduce the number of models or functions that need to be evaluated through Method 1. The specific determination method may be as following.

In case that the performance evaluation result obtained through Method 2 is lower than a specific threshold or falls within a specific interval, it is considered that further evaluation using Method 1 may be performed.

For example, in case that the offset between the characteristic distribution of the input in the current environment and the characteristic distribution of the input during the training of the model or function is less than a certain threshold, or the characteristic distribution of the input in the current environment falls within a specific interval (where the interval may be the interval determined by the characteristic distribution of the input during the training of the AI/ML model or function), then the preliminary performance evaluation result is: applicable to the current environment.

In an embodiment, other methods that may be used to roughly evaluate the performance of the AI/ML model or function and determine potential applicability of the AI/ML model or function to the current environmental condition by "estimating the performance of AI/ML models or functions without AI/ML model or function inference" are also applicable to the embodiments of the present application.

In an embodiment, the performance evaluation result obtained by Method 3 may include any one of following:
the evaluation result of the subset of models or functions through Method 1;
the evaluation result of the subset of models or functions through Method 1, and the evaluation result of the set of models or functions to be evaluated through Method 2; or
the evaluation result of the subset of models or functions through Method 1, and the evaluation result of the remaining M-M' AI/ML models or functions, in the set of models or functions to be evaluated that are not evaluated through Method 1, through Method 2.

According to the method in this embodiment, M' AI/ML models or functions applied in the current environment with good performance may firstly be roughly screened out from M AI/ML models or functions to be evaluated through Method 2, and then high-accuracy evaluation is performed on M' AI/ML models or functions through Method 1 to achieve a good compromise between time, overhead and evaluation accuracy.

The terminal device in the embodiments of the present application may be a device that provides voice and/or data connectivity to a user, a handheld device with a wireless connection function, or other processing devices connected to a wireless modem. In different systems, the names of the terminal device may be different. For example, in the 5G system, the terminal device may be called as user equipment (UE). A wireless terminal device may communicate with one or more core networks (CNs) via a radio access network (RAN), and the wireless terminal device may be a mobile terminal device, such as a mobile phone (or cellular phone), or a computer with a mobile terminal device, e.g., a portable mobile device, a pocket-sized mobile device, a handheld mobile device, a computer-built mobile device or a vehicle-mounted mobile device, which exchanges language and/or data with the radio access network. For example, a personal communication service (PCS) phone, a radio phone, a session initiated protocol (SIP) phone, a wireless local loop (WLL) station, a personal digital assistant (PDA) and other devices. The wireless terminal device may also be called a system, a subscriber unit, a subscriber station, a mobile station, a mobile, a remote station, an access point, a remote terminal, an access terminal, a user terminal, a user agent, or a user device, which is not limited in the embodiments of the present application.

The network device in the embodiments of the present application may be a base station, and the base station may include multiple cells providing services for the terminal. Depending on the specific scenario, the base station may be called an access point, or a device communicating with the wireless terminal device through one or more sectors on the air interface in the access network, or other names. The network device may be used for exchanging the received air frames with Internet Protocol (IP) packets, and acting as a router between the wireless terminal device and the rest of the access network, where the rest of the access network may include an IP communication network. The network device may also coordinate attribute management for the air interface. For example, the network device in the embodiments of the present application may be a base transceiver station (BTS) in a global system for mobile communications (GSM) or a code division multiple access (CDMA), a node B in a wide-band code division multiple access (WCDMA), an evolutional node B (eNB or e-Node B) in a long term evolution (LTE) system, a 5G base station (gNB) in 5G network architecture (next generation system), a home evolved node B (HeNB), a relay node, a femto, or a pico base station (pico), etc., which is not limited in the embodiments of the present application. In some network structures, the network device may include a centralized unit (CU) node and a distributed unit (DU) node, and the centralized unit and the distributed unit may be arranged to be geographically separated.

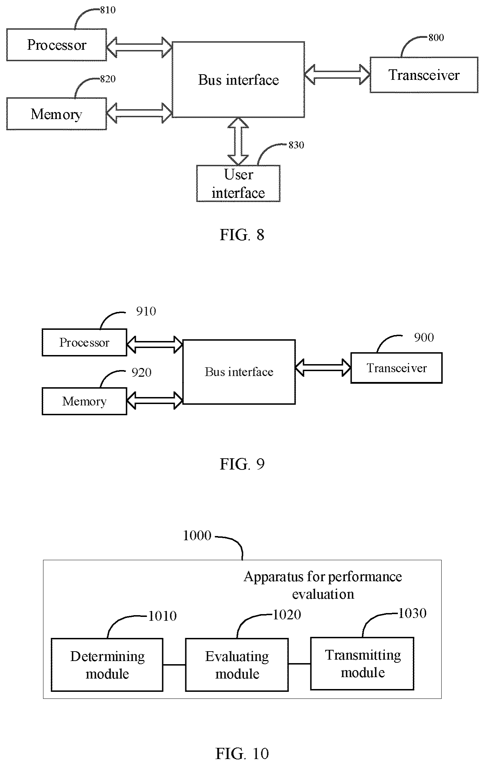

FIG. 8 is a schematic structural diagram of a terminal according to an embodiment of the present application. As shown in FIG. 8, the terminal includes a memory 820, a transceiver 800, and a processor 810,
where the memory 820 is used for storing a computer program; the transceiver 800 is used for receiving and transmitting data under control of the processor; and the processor 810 is used for reading the computer program in the memory 820 and performing the following operations:
determining a set of models or functions to be evaluated, where a model in the set of models or functions to be evaluated is deployed on the terminal, and a function in the set of models or functions to be evaluated is a function supported by the terminal;
performing a performance evaluation on the model or function in the set of models or functions to be evaluated to obtain a performance evaluation result; and
transmitting the performance evaluation result to a network side.

In an embodiment, the transceiver 800 is used for receiving and transmitting data under control of the processor 810.

In FIG. 8, a bus architecture may include any number of interconnected buses and bridges, which are linked together through various circuits of one or more processors represented by the processor 810 and one or more memories represented by the memory 820. The bus architecture may also link together various other circuits, such as peripherals, voltage regulators, and power management circuits, etc., which are well known in the art, and therefore are not further described in the present application. The bus interface provides an interface. The transceiver 800 may include multiple elements, i.e., including a transmitter and a receiver, for providing units for communicating with various other devices over transmission media including wireless channels, wired channels, fiber optic cables, and the like. For different user equipments, a user interface 830 may be an interface with a capability of connecting external and internal devices, including but are not limited to keypads, displays, speakers, microphones, joysticks, etc.

The processor 810 is responsible for managing the bus architecture and general processing, and the memory 820 may store data used by the processor 810 when performing operations.

In an embodiment, the processor 1010 may be a central processing unit (Central Processing Unit, CPU), an application specific integrated circuit (Application Specific Integrated Circuit, ASIC), a field-programmable gate array (Field - Programmable Gate Array, FPGA), or a complex programmable logic device (Complex Programmable Logic Device, CPLD), the processor may also use a multi-core architecture.

The processor calls the computer program stored in the memory to perform any of the methods provided by the embodiments of the present application according to the obtained executable instructions. The processor and the memory may also be arranged to be physically separated.

In an embodiment, the processor 810 is used for any of the following:
activating at least one model or function in the set of models or functions to be evaluated within a first time window, obtaining an output of the at least one model or function, and obtaining, based on the output of the at least one model or function, a performance evaluation result corresponding to the at least one model or function respectively;
obtaining the performance evaluation result based on an input distribution characteristic and/or an application condition corresponding to the model or function in the set of models or functions to be evaluated; or
determining, based on an input distribution characteristic and/or an application condition corresponding to the model or function in the set of models or functions to be evaluated, a subset of models or functions to be further evaluated from the set of models or functions to be evaluated, activating at least one model or function in the subset of models or functions within a first time window, obtaining an output of the at least one model or function, and obtaining the performance evaluation result based on the output of the at least one model or function.

In an embodiment, in case of obtaining the performance evaluation result based on the output of the at least one model or function, the performance evaluation result includes one of more of following:
the output of the at least one model or function;
an accuracy evaluation result of the output of the at least one model or function;
a system performance evaluation result after applying the output of the at least one model or function to a communication system;
output distribution characteristic information of the at least one model or function;
offset information of an output distribution characteristic, of the at least one model or function, relative to a reference output distribution characteristic;
a model or function that the terminal expects to activate, or a model or function that the terminal does not expect to activate, where the model or function that the terminal expects to activate or the model or function that the terminal does not expect to activate is determined based on the output of the at least one model or function; or
model or function management information of the terminal, where the model or function management information is used to represent that the terminal performs model or function management based on the output of the at least one model or function, and the model or function management includes at least one of following: model or function activation processing, model or function switching processing, model or function update processing, or fallback processing.

In an embodiment, in case of obtaining the performance evaluation result based on the input distribution characteristic and/or the application condition corresponding to the model or function in the set of models or functions to be evaluated, the performance evaluation result includes one of more of following:
an input corresponding to the model or function in the set of models or functions to be evaluated;
input distribution characteristic information corresponding to the model or function in the set of models or functions to be evaluated;
characteristic offset information of the input distribution characteristic, corresponding to the model or function in the set of models or functions to be evaluated, relative to a reference input distribution characteristic;
the application condition corresponding to the model or function in the set of models or functions to be evaluated;
information of applicability of the model or function, in the set of models or functions to be evaluated, to a condition where the terminal is located, where the information of applicability is determined based on the condition where the terminal is located and the application condition corresponding to the model or function;
a model or function that the terminal expects to activate, or a model or function that the terminal does not expect to activate, where the model or function that the terminal expects to activate or the model or function that the terminal does not expect to activate is determined based on an input distribution characteristic offset and/or the application condition corresponding to the model or function in the set of models or functions to be evaluated; or
model or function management information of the terminal, where the model or function management information is used to represent that the terminal performs model or function management based on the input distribution characteristic and/or the application condition corresponding to the model or function in the set of models or functions to be evaluated, and the model or function management includes at least one of following: model or function activation processing, model or function switching processing, model or function update processing, or fallback processing.

In an embodiment, the first time window is a continuous time window, or the first time window includes multiple non-overlapping sub-time windows.

In an embodiment, the first time window is a periodic time window or a time window triggered based on an instruction from the network side.

In an embodiment, a length of the first time window is determined based on a predefined fixed duration, or determined based on configuration information or indication information from the network side, or determined by the terminal, or determined based on predefined first information;
where the first information includes one or more of following: a number of models or functions in the set of models or functions to be evaluated, a number of models or functions simultaneously activated by the terminal, a number of models or functions remaining activated, or a duration from activating any model or function in the set of models or functions to be evaluated to obtaining the output of the model or function.

In an embodiment, in case that the duration of the first time window is determined by the terminal, the method further includes:
transmitting first indication information to the network side, where the first indication information is used to indicate the duration of the first time window determined by the terminal.

In an embodiment, the processor 810 is used for any of the following:
transmitting a performance evaluation result corresponding to a model or function activated within the first time window after the first time window ends; or
transmitting a performance evaluation result corresponding to a model or function activated before the first time window within the first time window.

In an embodiment, the processor 810 is used for any of the following:
not transmitting, within the first time window, a performance evaluation result corresponding to a model or function activated within the first time window;
not expecting to transmit, within the first time window, a performance evaluation result corresponding to a model or function activated within the first time window; or
not expecting to transmit, within the first time window, a performance evaluation result.

In an embodiment, in case that the first time window includes multiple non-overlapping sub-time windows, the processor 810 is used for any of the following:
transmitting a performance evaluation result corresponding to a model or function activated within the sub-time window after each sub-time window ends;
transmitting performance evaluation results corresponding to models or functions activated within N sub-time windows after the N sub-time windows end, where N is a positive integer and less than a number of the multiple sub-time windows included in the first time window; or
transmitting performance evaluation results corresponding to models or functions activated within multiple sub-time windows after all the multiple sub-time windows included in the first time window end.

In an embodiment, the processor 810 is used for:
determining the set of models or functions to be evaluated at least partly based on second indication information from the network side.

In an embodiment, the processor 810 is used for:
transmitting third indication information to the network side, where the third indication information is used to indicate the set of models or functions to be evaluated determined by the terminal.

It should be noted here that the above-mentioned terminals provided by the embodiments of the present application may implement all the method steps implemented by the above-mentioned method embodiment with the terminal as the execution subject, and may achieve the same effects. The same parts and beneficial effects in the embodiments as those in the method embodiments are not described in detail.

FIG. 9 is a schematic structural diagram of a network side device according to an embodiment of the present application. As shown in FIG. 9, the network side device includes: a memory 920 , a transceiver 900, and a processor 910;
where the memory 920 is used for storing a computer program; the transceiver 900 is used for receiving and transmitting data under control of the processor; and the processor 910 is used for reading the computer program in the memory 920 and performing the following operations:
receiving a performance evaluation result transmitted from a terminal,
where the performance evaluation result is determined based on a performance evaluation on a model or function in a set of models or functions to be evaluated, and the model or function in the set of models or functions to be evaluated is deployed on the terminal.

In an embodiment, the transceiver 900 is used for receiving and transmitting data under control of the processor 910.

In FIG. 9, a bus architecture may include any number of interconnected buses and bridges, which are linked together through various circuits of one or more processors represented by the processor 910 and one or more memories represented by the memory 920. The bus architecture may also link together various other circuits, such as peripherals, voltage regulators, and power management circuits, etc., which are well known in the art, and therefore are not further described in the present application. The bus interface provides an interface. The transceiver 900 may include multiple elements, i.e., including a transmitter and a receiver, for providing units for communicating with various other devices over transmission media including wireless channels, wired channels, fiber optic cables, and the like. The processor 910 is responsible for managing the bus architecture and general processing, and the memory 920 may store data used by the processor 910 when performing operations.

In some embodiments, the processor 910 may be a central processing unit (Central Processing Unit, CPU), an application specific integrated circuit (ASIC), a field-programmable gate array (FPGA), or a complex programmable logic device (CPLD), the processor may also use a multi-core architecture.

In an embodiment, the processor 910 is used for:
transmitting configuration information or indication information to the terminal, where the configuration information or indication information is used to configure a first time window.

In an embodiment, the processor 910 is used for:
receiving first indication information transmitted from the terminal, where the first indication information is used to indicate a duration of a first time window determined by the terminal.

In an embodiment, the processor 910 is used for:
transmitting second indication information to the terminal, where the second indication information is used to indicate the set of models or functions to be evaluated.

In an embodiment, the processor 910 is used for:
receiving third indication information transmitted from the terminal, where the third indication information is used to indicate the set of models or functions to be evaluated determined by the terminal.

In an embodiment, the processor 910 is used for:
receiving, after the first time window ends, a performance evaluation result corresponding to a model or function activated within the first time window; or
receiving, within the first time window, a performance evaluation result corresponding to a model or function activated before the first time window.

In an embodiment, the processor 910 is used for any of the following:
not receiving, within the first time window, a performance evaluation result corresponding to a model or function activated within the first time window;
not receiving the performance evaluation result within the first time window; or
not configuring or indicating the terminal to transmit the performance evaluation result within the first time window.

It should be noted that the network side device provided by the embodiments of the present application may implement all the method steps implemented by the above-mentioned method embodiment with the network side device as the execution subject, and may achieve the same effects. The same parts and beneficial effects in the embodiments as those in the method embodiments are not described in detail.

FIG. 10 is a schematic structural diagram of an apparatus for performance evaluation according to an embodiment of the present application. As shown in FIG. 10, the apparatus 1000 includes: a determining module 1010, an evaluating module 1020, and a transmitting module,
where the determining module 1010 is used for determining a set of models or functions to be evaluated, where a model in the set of models or functions to be evaluated is deployed on the terminal, and a function in the set of models or functions to be evaluated is a function supported by the terminal;
the evaluating module 1020 is used for performing a performance evaluation on the model or function in the set of models or functions to be evaluated to obtain a performance evaluation result; and
the transmitting module 1030 is used for transmitting the performance evaluation result to a network side.

In an embodiment, the evaluation module 1020 is used for any of following:
activating at least one model or function in the set of models or functions to be evaluated within a first time window, obtaining an output of the at least one model or function, and obtaining, based on the output of the at least one model or function, a performance evaluation result corresponding to the at least one model or function respectively;
obtaining the performance evaluation result based on an input distribution characteristic and/or an application condition corresponding to the model or function in the set of models or functions to be evaluated; or
determining, based on an input distribution characteristic and/or an application condition corresponding to the model or function in the set of models or functions to be evaluated, a subset of models or functions to be further evaluated from the set of models or functions to be evaluated, activating at least one model or function in the subset of models or functions within a first time window, obtaining an output of the at least one model or function, and obtaining the performance evaluation result based on the output of the at least one model or function.

In an embodiment, in case of obtaining the performance evaluation result based on the output of the at least one model or function, the performance evaluation result includes one of more of following:
the output of the at least one model or function;
an accuracy evaluation result of the output of the at least one model or function;
a system performance evaluation result after applying the output of the at least one model or function to a communication system;
output distribution characteristic information of the at least one model or function;
offset information of an output distribution characteristic, of the at least one model or function, relative to a reference output distribution characteristic;
a model or function that the terminal expects to activate, or a model or function that the terminal does not expect to activate, where the model or function that the terminal expects to activate or the model or function that the terminal does not expect to activate is determined based on the output of the at least one model or function; or
model or function management information of the terminal, where the model or function management information is used to represent that the terminal performs model or function management based on the output of the at least one model or function, and the model or function management includes at least one of following: model or function activation processing, model or function switching processing, model or function update processing, or fallback processing.

In an embodiment, in case of obtaining the performance evaluation result based on the input distribution characteristic and/or the application condition corresponding to the model or function in the set of models or functions to be evaluated, the performance evaluation result includes one of more of following:
an input corresponding to the model or function in the set of models or functions to be evaluated;
input distribution characteristic information corresponding to the model or function in the set of models or functions to be evaluated;
characteristic offset information of the input distribution characteristic, corresponding to the model or function in the set of models or functions to be evaluated, relative to a reference input distribution characteristic;
the application condition corresponding to the model or function in the set of models or functions to be evaluated;
information of applicability of the model or function, in the set of models or functions to be evaluated, to a condition where the terminal is located, where the information of applicability is determined based on the condition where the terminal is located and the application condition corresponding to the model or function;
a model or function that the terminal expects to activate, or a model or function that the terminal does not expect to activate, where the model or function that the terminal expects to activate or the model or function that the terminal does not expect to activate is determined based on an input distribution characteristic offset and/or the application condition corresponding to the model or function in the set of models or functions to be evaluated; or
model or function management information of the terminal, where the model or function management information is used to represent that the terminal performs model or function management based on the input distribution characteristic and/or the application condition corresponding to the model or function in the set of models or functions to be evaluated, and the model or function management includes at least one of following: model or function activation processing, model or function switching processing, model or function update processing, or fallback processing.

In an embodiment, the first time window is a continuous time window, or the first time window includes multiple non-overlapping sub-time windows.

In an embodiment, the first time window is a periodic time window or a time window triggered based on an instruction from the network side.

In an embodiment, a length of the first time window is determined based on a predefined fixed duration, or determined based on configuration information or indication information from the network side, or determined by the terminal, or determined based on predefined first information;
where the first information includes one or more of following: a number of models or functions in the set of models or functions to be evaluated, a number of models or functions simultaneously activated by the terminal, a number of models or functions remaining activated, or a duration from activating any model or function in the set of models or functions to be evaluated to obtaining the output of the model or function.

In an embodiment, in case that the duration of the first time window is determined by the terminal, the apparatus further includes:
a first indication information transmitting module, used for transmitting first indication information to the network side, where the first indication information is used to indicate the duration of the first time window determined by the terminal.

In an embodiment, the transmitting module 1030 is used for one or more of following:
transmitting a performance evaluation result corresponding to a model or function activated within the first time window after the first time window ends; or
transmitting a performance evaluation result corresponding to a model or function activated before the first time window within the first time window.

In an embodiment, the apparatus further including a result transmitting module used for one or more of following:
not transmitting, within the first time window, a performance evaluation result corresponding to a model or function activated within the first time window;
not expecting to transmit, within the first time window, a performance evaluation result corresponding to a model or function activated within the first time window; or
not expecting to transmit, within the first time window, a performance evaluation result.

In an embodiment, in case that the first time window includes multiple non-overlapping sub-time windows, the transmitting module 1030 is used for one or more of following:
transmitting a performance evaluation result corresponding to a model or function activated within the sub-time window after each sub-time window ends;
transmitting performance evaluation results corresponding to models or functions activated within N sub-time windows after the N sub-time windows end, where N is a positive integer and less than a number of the multiple sub-time windows included in the first time window; or
transmitting performance evaluation results corresponding to models or functions activated within multiple sub-time windows after all the multiple sub-time windows included in the first time window end.

In an embodiment, the determining module is used for:
determining the set of models or functions to be evaluated at least partly based on second indication information from the network side.

In an embodiment, the apparatus further includes:
a third indication information transmitting module, used for transmitting third indication information to the network side, where the third indication information is used to indicate the set of models or functions to be evaluated determined by the terminal.

It should be noted that, the division of units/ module in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

In an embodiment, the above-mentioned computer-readable storage medium provided by the embodiments of the present application may implement all the steps of methods implemented by the above-mentioned method, and may achieve the same effects. The same parts and beneficial effects in the embodiments as those in the method embodiments are not described in detail.

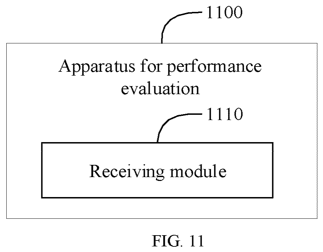

FIG. 11 is a schematic structural diagram of an apparatus for performance evaluation according to an embodiment of the present application. As shown in FIG. 11, the apparatus 1100 includes: a receiving module 1110,
where the receiving module 1110 is used for receiving a performance evaluation result transmitted from a terminal,
where the performance evaluation result is determined based on a performance evaluation on a model or function in a set of models or functions to be evaluated, and the model or function in the set of models or functions to be evaluated is deployed on the terminal.

In an embodiment, the apparatus further includes:
an information transmitting module, used for transmitting configuration information or indication information to the terminal, where the configuration information or indication information is used to configure a first time window.

In an embodiment, the apparatus further includes:
a first indication information receiving module, used for receiving first indication information transmitted from the terminal, where the first indication information is used to indicate a duration of a first time window determined by the terminal.

In an embodiment, the apparatus further includes:
a second indication information transmitting module, used for transmitting second indication information to the terminal, where the second indication information is used to indicate the set of models or functions to be evaluated.

In an embodiment, the apparatus further includes:
a third indication information receiving module, used for receiving third indication information transmitted from the terminal, where the third indication information is used to indicate the set of models or functions to be evaluated determined by the terminal.

In an embodiment, the receiving module 1110 is used for:
receiving, after the first time window ends, a performance evaluation result corresponding to a model or function activated within the first time window; or
receiving, within the first time window, a performance evaluation result corresponding to a model or function activated before the first time window.

In an embodiment, the apparatus further includes a result receiving module used for one or more of following:
not receiving, within the first time window, a performance evaluation result corresponding to a model or function activated within the first time window;
not receiving the performance evaluation result within the first time window; or
not configuring or indicating the terminal to transmit the performance evaluation result within the first time window.

In an embodiment, the above-mentioned computer-readable storage medium provided by the embodiments of the present application may implement all the steps of methods implemented by the above-mentioned method, and may achieve the same effects. The same parts and beneficial effects in the embodiments as those in the method embodiments are not described in detail.

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a processor readable storage medium. Based on such understanding, the solutions of the present application in essence or a part of the solutions that contributes to the related art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes, such as a flash drive, a mobile hard disk, a read-only memory (Read-Only Memory, ROM), a random access memory (Random Access Memory, RAM), a magnetic disk, or a compact disk.

It should be noted that the above-mentioned apparatuses may implement all the method steps implemented by the above-mentioned method embodiment and may achieve the same effects. The same parts and beneficial effects in the embodiments as those in the method embodiments are not described in detail.

An embodiment of the present application also provides a processor-readable storage medium storing a computer program, and the computer program is used for causing a processor to perform any of the method for performance evaluation provided by the above embodiments of the present application.

The processor-readable storage medium may be any available medium or data storage device that may be accessed by a processor, including but not limited to magnetic storage (such as floppy disks, hard disks, magnetic tapes, magneto-optical disks (MO)), optical storage (such as CDs, DVDs, BDs, HVDs, etc.), and semiconductor storage (such as ROM, EPROM, EEPROM, nonvolatile memory (NAND FLASH), solid-state drives (SSDs)), etc.

As will be appreciated by those skilled in the art, embodiments of the present application may be provided as methods, systems, or computer program products. The present application may take the form of an entirely hardware embodiment, an entirely software embodiment, or an embodiment combining software and hardware. Moreover, the present application may take the form of a computer program product implemented on one or more computer-usable storage media (including but not limited to disk storage and optical storage, etc.) having computer-usable program code.

The present application is described with reference to flow charts and/or block diagrams of methods, apparatus (systems), and computer program products according to embodiments of the present application. It will be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor readable memory capable of directing a computer or other programmable data processing apparatus to operate in a particular manner, and the instructions stored in the processor readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It will be apparent to those skilled in the art that various modifications and variations may be made in the present application without departing from the scope of the present application. Thus, provided that these modifications and variations of the present application fall within the scope of the claims of the present application and their equivalents, the present application is also intended to cover such modifications and variations.

## Claims

1. A method for performance evaluation, performed by a terminal, comprising:
determining a set of models or functions to be evaluated, wherein a model in the set of models or functions to be evaluated is deployed on the terminal, and a function in the set of models or functions to be evaluated is a function supported by the terminal;
performing a performance evaluation on the model or function in the set of models or functions to be evaluated to obtain a performance evaluation result; and
transmitting the performance evaluation result to a network side.

2. The method of claim 1, wherein performing the performance evaluation on the model or function in the set of models or functions to be evaluated to obtain the performance evaluation result comprises any of following:
activating at least one model or function in the set of models or functions to be evaluated within a first time window, obtaining an output of the at least one model or function, and obtaining, based on the output of the at least one model or function, a performance evaluation result corresponding to the at least one model or function respectively;
obtaining the performance evaluation result based on an input distribution characteristic and/or an application condition corresponding to the model or function in the set of models or functions to be evaluated; or
determining, based on an input distribution characteristic and/or an application condition corresponding to the model or function in the set of models or functions to be evaluated, a subset of models or functions to be further evaluated from the set of models or functions to be evaluated, activating at least one model or function in the subset of models or functions within a first time window, obtaining an output of the at least one model or function, and obtaining the performance evaluation result based on the output of the at least one model or function.

3. The method of claim 2, wherein in case of obtaining the performance evaluation result based on the output of the at least one model or function, the performance evaluation result comprises one of more of following:
the output of the at least one model or function;
an accuracy evaluation result of the output of the at least one model or function;
a system performance evaluation result after applying the output of the at least one model or function to a communication system;
output distribution characteristic information of the at least one model or function;
offset information of an output distribution characteristic, of the at least one model or function, relative to a reference output distribution characteristic;
a model or function that the terminal expects to activate, or a model or function that the terminal does not expect to activate, wherein the model or function that the terminal expects to activate or the model or function that the terminal does not expect to activate is determined based on the output of the at least one model or function; or
model or function management information of the terminal, wherein the model or function management information is used to represent that the terminal performs model or function management based on the output of the at least one model or function, and the model or function management comprises at least one of following: model or function activation processing, model or function switching processing, model or function update processing, or fallback processing.

4. The method of claim 2, wherein in case of obtaining the performance evaluation result based on the input distribution characteristic and/or the application condition corresponding to the model or function in the set of models or functions to be evaluated, the performance evaluation result comprises one of more of following:
an input corresponding to the model or function in the set of models or functions to be evaluated;
input distribution characteristic information corresponding to the model or function in the set of models or functions to be evaluated;
characteristic offset information of the input distribution characteristic, corresponding to the model or function in the set of models or functions to be evaluated, relative to a reference input distribution characteristic;
the application condition corresponding to the model or function in the set of models or functions to be evaluated;
information of applicability of the model or function, in the set of models or functions to be evaluated, to a condition where the terminal is located, wherein the information of applicability is determined based on the condition where the terminal is located and the application condition corresponding to the model or function;
a model or function that the terminal expects to activate, or a model or function that the terminal does not expect to activate, wherein the model or function that the terminal expects to activate or the model or function that the terminal does not expect to activate is determined based on an input distribution characteristic offset and/or the application condition corresponding to the model or function in the set of models or functions to be evaluated; or
model or function management information of the terminal, wherein the model or function management information is used to represent that the terminal performs model or function management based on the input distribution characteristic and/or the application condition corresponding to the model or function in the set of models or functions to be evaluated, and the model or function management comprises at least one of following: model or function activation processing, model or function switching processing, model or function update processing, or fallback processing.

5. The method of claim 2, wherein the first time window is a continuous time window, or the first time window comprises multiple non-overlapping sub-time windows.

6. The method of any of claims 2 to 5, wherein the first time window is a periodic time window or a time window triggered based on an indication from the network side.

7. The method of any of claims 2 to 6, wherein a length of the first time window is determined based on a predefined fixed duration, or determined based on configuration information or indication information from the network side, or determined by the terminal, or determined based on predefined first information;
wherein the first information comprises one or more of following: a number of models or functions in the set of models or functions to be evaluated, a number of models or functions simultaneously activated by the terminal, a number of models or functions remaining activated, or a duration from activating any model or function in the set of models or functions to be evaluated to obtaining the output of the model or function.

8. The method of claim 7, wherein in case that the duration of the first time window is determined by the terminal, the method further comprises:
transmitting first indication information to the network side, wherein the first indication information is used to indicate the duration of the first time window determined by the terminal.

9. The method of any of claims 2 to 8, wherein transmitting the performance evaluation result to the network side comprises one or more of following:
transmitting a performance evaluation result corresponding to a model or function activated within the first time window after the first time window ends; or
transmitting a performance evaluation result corresponding to a model or function activated before the first time window within the first time window.

10. The method of any of claims 2 to 9, further comprising one or more of following:
not transmitting, within the first time window, a performance evaluation result corresponding to a model or function activated within the first time window;
not expecting to transmit, within the first time window, a performance evaluation result corresponding to a model or function activated within the first time window; or
not expecting to transmit, within the first time window, the performance evaluation result.

11. The method of claim 5, wherein in case that the first time window comprises multiple non-overlapping sub-time windows, transmitting the performance evaluation result to the network side comprises one or more of following:
transmitting a performance evaluation result corresponding to a model or function activated within the sub-time window after each sub-time window ends;
transmitting performance evaluation results corresponding to models or functions activated within N sub-time windows after the N sub-time windows end, wherein N is a positive integer and less than a number of the multiple sub-time windows comprised in the first time window; or
transmitting performance evaluation results corresponding to models or functions activated within multiple sub-time windows after all the multiple sub-time windows comprised in the first time window end.

12. The method of any of claims 1 to 11, wherein determining the set of models or functions to be evaluated comprises:
determining the set of models or functions to be evaluated at least partly based on second indication information from the network side.

13. The method of claim 1, further comprising:
transmitting third indication information to the network side, wherein the third indication information is used to indicate the set of models or functions to be evaluated determined by the terminal.

14. A method for performance evaluation, performed by a network side, comprising:
receiving a performance evaluation result transmitted from a terminal,
wherein the performance evaluation result is determined based on a performance evaluation on a model or function in a set of models or functions to be evaluated, and the model or function in the set of models or functions to be evaluated is deployed on the terminal.

15. The method of claim 14, further comprising:
transmitting configuration information or indication information to the terminal, wherein the configuration information or indication information is used to configure a first time window.

16. The method of claim 14, further comprising:
receiving first indication information transmitted from the terminal, wherein the first indication information is used to indicate a duration of a first time window determined by the terminal.

17. The method of claim 14, further comprising:
transmitting second indication information to the terminal, wherein the second indication information is used to indicate the set of models or functions to be evaluated.

18. The method of claim 14, further comprising:
receiving third indication information transmitted from the terminal, wherein the third indication information is used to indicate the set of models or functions to be evaluated determined by the terminal.

19. The method of claim 15, wherein receiving the performance evaluation result transmitted from the terminal comprises:
receiving, after the first time window ends, a performance evaluation result corresponding to a model or function activated within the first time window; or
receiving, within the first time window, a performance evaluation result corresponding to a model or function activated before the first time window.

20. The method of claim 15, further comprising one or more of following:
not receiving, within the first time window, a performance evaluation result corresponding to a model or function activated within the first time window;
not receiving the performance evaluation result within the first time window; or
not configuring or indicating the terminal to transmit the performance evaluation result within the first time window.

21. A terminal, comprising: a memory, a transceiver, and a processor;
wherein the memory is used for storing a computer program; the transceiver is used for receiving and transmitting data under control of the processor; and the processor is used for reading the computer program in the memory and performing following operations:
determining a set of models or functions to be evaluated, wherein a model in the set of models or functions to be evaluated is deployed on the terminal;
performing a performance evaluation on the model or function in the set of models or functions to be evaluated to obtain a performance evaluation result; and
transmitting the performance evaluation result to a network side.

22. The terminal of claim 21, wherein performing the performance evaluation on the model or function in the set of models or functions to be evaluated to obtain the performance evaluation result comprises any of following:
activating at least one model or function in the set of models or functions to be evaluated within a first time window, obtaining an output of the at least one model or function, and obtaining, based on the output of the at least one model or function, a performance evaluation result corresponding to the at least one model or function respectively;
obtaining the performance evaluation result based on an input distribution characteristic and/or an application condition corresponding to the model or function in the set of models or functions to be evaluated; or
determining, based on an input distribution characteristic and/or an application condition corresponding to the model or function in the set of models or functions to be evaluated, a subset of models or functions to be further evaluated from the set of models or functions to be evaluated, activating at least one model or function in the subset of models or functions within a first time window, obtaining an output of the at least one model or function, and obtaining the performance evaluation result based on the output of the at least one model or function.

23. The terminal of claim 22, wherein in case of obtaining the performance evaluation result based on the output of the at least one model or function, the performance evaluation result comprises one of more of following:
the output of the at least one model or function;
an accuracy evaluation result of the output of the at least one model or function;
a system performance evaluation result after applying the output of the at least one model or function to a communication system;
output distribution characteristic information of the at least one model or function;
offset information of an output distribution characteristic, of the at least one model or function, relative to a reference output distribution characteristic;
a model or function that the terminal expects to activate, or a model or function that the terminal does not expect to activate, wherein the model or function that the terminal expects to activate or the model or function that the terminal does not expect to activate is determined based on the output of the at least one model or function; or
model or function management information of the terminal, wherein the model or function management information is used to represent that the terminal performs model or function management based on the output of the at least one model or function, and the model or function management comprises at least one of following: model or function activation processing, model or function switching processing, model or function update processing, or fallback processing.

24. The terminal of claim 22, wherein in case of obtaining the performance evaluation result based on the input distribution characteristic and/or the application condition corresponding to the model or function in the set of models or functions to be evaluated, the performance evaluation result comprises one of more of following:
an input corresponding to the model or function in the set of models or functions to be evaluated;
input distribution characteristic information corresponding to the model or function in the set of models or functions to be evaluated;
characteristic offset information of the input distribution characteristic, corresponding to the model or function in the set of models or functions to be evaluated, relative to a reference input distribution characteristic;
the application condition corresponding to the model or function in the set of models or functions to be evaluated;
information of applicability of the model or function, in the set of models or functions to be evaluated, to a condition where the terminal is located, wherein the information of applicability is determined based on the condition where the terminal is located and the application condition corresponding to the model or function;
a model or function that the terminal expects to activate, or a model or function that the terminal does not expect to activate, wherein the model or function that the terminal expects to activate or the model or function that the terminal does not expect to activate is determined based on an input distribution characteristic offset and/or the application condition corresponding to the model or function in the set of models or functions to be evaluated; or
model or function management information of the terminal, wherein the model or function management information is used to represent that the terminal performs model or function management based on the input distribution characteristic and/or the application condition corresponding to the model or function in the set of models or functions to be evaluated, and the model or function management comprises at least one of following: model or function activation processing, model or function switching processing, model or function update processing, or fallback processing.

25. The terminal of claim 22, wherein the first time window is a continuous time window, or the first time window comprises multiple non-overlapping sub-time windows.

26. The terminal of any of claims 22 to 25, wherein the first time window is a periodic time window or a time window triggered based on an indication from the network side.

27. The terminal of any of claims 22 to 26, wherein a length of the first time window is determined based on a predefined fixed duration, or determined based on configuration information or indication information from the network side, or determined by the terminal, or determined based on predefined first information;
wherein the first information comprises one or more of following: a number of models or functions in the set of models or functions to be evaluated, a number of models or functions simultaneously activated by the terminal, a number of models or functions remaining activated, or a duration from activating any model or function in the set of models or functions to be evaluated to obtaining the output of the model or function.

28. The terminal of claim 27, wherein in case that the duration of the first time window is determined by the terminal, the operations further comprise:
transmitting first indication information to the network side, wherein the first indication information is used to indicate the duration of the first time window determined by the terminal.

29. The terminal of any of claims 22 to 28, wherein transmitting the performance evaluation result to the network side comprises one or more of following:
transmitting a performance evaluation result corresponding to a model or function activated within the first time window after the first time window ends; or
transmitting a performance evaluation result corresponding to a model or function activated before the first time window within the first time window.

30. The terminal of any of claims 22 to 29, wherein the operations further comprise one or more of following:
not transmitting, within the first time window, a performance evaluation result corresponding to a model or function activated within the first time window;
not expecting to transmit, within the first time window, a performance evaluation result corresponding to a model or function activated within the first time window; or
not expecting to transmit, within the first time window, the performance evaluation result.

31. The terminal of claim 25, wherein in case that the first time window comprises multiple non-overlapping sub-time windows, transmitting the performance evaluation result to the network side comprises one or more of following:
transmitting a performance evaluation result corresponding to a model or function activated within the sub-time window after each sub-time window ends;
transmitting performance evaluation results corresponding to models or functions activated within N sub-time windows after the N sub-time windows end, wherein N is a positive integer and less than a number of the multiple sub-time windows comprised in the first time window; or
transmitting performance evaluation results corresponding to models or functions activated within multiple sub-time windows after all the multiple sub-time windows comprised in the first time window end.

32. The terminal of any of claims 21 to 31, wherein determining the set of models or functions to be evaluated comprises:
determining the set of models or functions to be evaluated at least partly based on second indication information from the network side.

33. The terminal of claim 21, wherein the operations further comprise:
transmitting third indication information to the network side, wherein the third indication information is used to indicate the set of models or functions to be evaluated determined by the terminal.

34. A network side device, comprising: a memory, a transceiver, and a processor;
wherein the memory is used for storing a computer program; the transceiver is used for receiving and transmitting data under control of the processor; and the processor is used for reading the computer program in the memory and performing following operations:
receiving a performance evaluation result transmitted from a terminal,
wherein the performance evaluation result is determined based on a performance evaluation on a model or function in a set of models or functions to be evaluated, and the model or function in the set of models or functions to be evaluated is deployed on the terminal.

35. The device of claim 34, the operations further comprising:
transmitting configuration information or indication information to the terminal, wherein the configuration information or indication information is used to configure a first time window.

36. The device of claim 34, the operations further comprising:
receiving first indication information transmitted from the terminal, wherein the first indication information is used to indicate a duration of a first time window determined by the terminal.

37. The device of claim 34, the operations further comprising:
transmitting second indication information to the terminal, wherein the second indication information is used to indicate the set of models or functions to be evaluated.

38. The device of claim 34, the operations further comprising: receiving third indication information transmitted from the terminal, wherein the third indication information is used to indicate the set of models or functions to be evaluated determined by the terminal.

39. The device of claim 35, wherein receiving the performance evaluation result transmitted from the terminal comprises:
receiving, after the first time window ends, a performance evaluation result corresponding to a model or function activated within the first time window; or
receiving, within the first time window, a performance evaluation result corresponding to a model or function activated before the first time window.

40. The device of claim 35, wherein the operations further comprising one or more of following:
not receiving, within the first time window, a performance evaluation result corresponding to a model or function activated within the first time window;
not receiving the performance evaluation result within the first time window; or
not configuring or indicating the terminal to transmit the performance evaluation result within the first time window.

41. An apparatus for performance evaluation, comprising:
a determining module, used for determining a set of models or functions to be evaluated, wherein a model in the set of models or functions to be evaluated is deployed on the terminal;
an evaluating module, used for performing a performance evaluation on the model or function in the set of models or functions to be evaluated to obtain a performance evaluation result; and
a transmitting module, used for transmitting the performance evaluation result to a network side.

42. The apparatus of claim 41, wherein the evaluating module is used for any of following:
activating at least one model or function in the set of models or functions to be evaluated within a first time window, obtaining an output of the at least one model or function, and obtaining, based on the output of the at least one model or function, a performance evaluation result corresponding to the at least one model or function respectively;
obtaining the performance evaluation result based on an input distribution characteristic and/or an application condition corresponding to the model or function in the set of models or functions to be evaluated; or
determining, based on an input distribution characteristic and/or an application condition corresponding to the model or function in the set of models or functions to be evaluated, a subset of models or functions to be further evaluated from the set of models or functions to be evaluated, activating at least one model or function in the subset of models or functions within a first time window, obtaining an output of the at least one model or function, and obtaining the performance evaluation result based on the output of the at least one model or function.

43. The apparatus of claim 42, wherein in case of obtaining the performance evaluation result based on the output of the at least one model or function, the performance evaluation result comprises one of more of following:
the output of the at least one model or function;
an accuracy evaluation result of the output of the at least one model or function;
a system performance evaluation result after applying the output of the at least one model or function to a communication system;
output distribution characteristic information of the at least one model or function;
offset information of an output distribution characteristic, of the at least one model or function, relative to a reference output distribution characteristic;
a model or function that the terminal expects to activate, or a model or function that the terminal does not expect to activate, wherein the model or function that the terminal expects to activate or the model or function that the terminal does not expect to activate is determined based on the output of the at least one model or function; or
model or function management information of the terminal, wherein the model or function management information is used to represent that the terminal performs model or function management based on the output of the at least one model or function, and the model or function management comprises at least one of following: model or function activation processing, model or function switching processing, model or function update processing, or fallback processing.

44. The apparatus of claim 42, wherein in case of obtaining the performance evaluation result based on the input distribution characteristic and/or the application condition corresponding to the model or function in the set of models or functions to be evaluated, the performance evaluation result comprises one of more of following:
an input corresponding to the model or function in the set of models or functions to be evaluated;
input distribution characteristic information corresponding to the model or function in the set of models or functions to be evaluated;
characteristic offset information of the input distribution characteristic, corresponding to the model or function in the set of models or functions to be evaluated, relative to a reference input distribution characteristic;
the application condition corresponding to the model or function in the set of models or functions to be evaluated;
information of applicability of the model or function, in the set of models or functions to be evaluated, to a condition where the terminal is located, wherein the information of applicability is determined based on the condition where the terminal is located and the application condition corresponding to the model or function;
a model or function that the terminal expects to activate, or a model or function that the terminal does not expect to activate, wherein the model or function that the terminal expects to activate or the model or function that the terminal does not expect to activate is determined based on an input distribution characteristic offset and/or the application condition corresponding to the model or function in the set of models or functions to be evaluated; or
model or function management information of the terminal, wherein the model or function management information is used to represent that the terminal performs model or function management based on the input distribution characteristic and/or the application condition corresponding to the model or function in the set of models or functions to be evaluated, and the model or function management comprises at least one of following: model or function activation processing, model or function switching processing, model or function update processing, or fallback processing.

45. The apparatus of claim 42, wherein the first time window is a continuous time window, or the first time window comprises multiple non-overlapping sub-time windows.

46. The apparatus of any of claims 42 to 45, wherein the first time window is a periodic time window or a time window triggered based on an indication from the network side.

47. The apparatus of any of claims 42 to 46, wherein a length of the first time window is determined based on a predefined fixed duration, or determined based on configuration information or indication information from the network side, or determined by the terminal, or determined based on predefined first information;
wherein the first information comprises one or more of following: a number of models or functions in the set of models or functions to be evaluated, a number of models or functions simultaneously activated by the terminal, a number of models or functions remaining activated, or a duration from activating any model or function in the set of models or functions to be evaluated to obtaining the output of the model or function.

48. The apparatus of claim 47, in case that the duration of the first time window is determined by the terminal, the apparatus further comprises:
a first indication information transmitting module, used for transmitting first indication information to the network side, wherein the first indication information is used to indicate the duration of the first time window determined by the terminal.

49. The apparatus of any of claims 42 to 48, wherein the transmitting module is used for one or more of following:
transmitting a performance evaluation result corresponding to a model or function activated within the first time window after the first time window ends; or
transmitting a performance evaluation result corresponding to a model or function activated before the first time window within the first time window.

50. The apparatus of any of claims 42 to 49, further comprising a result transmitting module used for one or more of following:
not transmitting, within the first time window, a performance evaluation result corresponding to a model or function activated within the first time window;
not expecting to transmit, within the first time window, a performance evaluation result corresponding to a model or function activated within the first time window; or
not expecting to transmit, within the first time window, a performance evaluation result.

51. The apparatus of claim 45, wherein the transmitting module is used for one or more of following:
in case that the first time window comprises multiple non-overlapping sub-time windows, transmitting a performance evaluation result corresponding to a model or function activated within the sub-time window after each sub-time window ends;
transmitting performance evaluation results corresponding to models or functions activated within N sub-time windows after the N sub-time windows end, wherein N is a positive integer and less than a number of the multiple sub-time windows comprised in the first time window;
transmitting performance evaluation results corresponding to models or functions activated within multiple sub-time windows after all the multiple sub-time windows comprised in the first time window end.

52. The apparatus of any of claims 41 to 51, wherein the determining module is used for:
determining the set of models or functions to be evaluated at least partly based on second indication information from the network side.

53. The apparatus of claim 41, further comprising:
a third indication information transmitting module, used for transmitting third indication information to the network side, wherein the third indication information is used to indicate the set of models or functions to be evaluated determined by the terminal.

54. An apparatus for performance evaluation, comprising:
a receiving module, used for receiving a performance evaluation result transmitted from a terminal,
wherein the performance evaluation result is determined based on a performance evaluation on a model or function in a set of models or functions to be evaluated, and the model or function in the set of models or functions to be evaluated is deployed on the terminal.

55. The apparatus of claim 54, further comprising:
an information transmitting module, used for transmitting configuration information or indication information to the terminal, wherein the configuration information or indication information is used to configure a first time window.

56. The apparatus of claim 54, further comprising:
a first indication information receiving module, used for receiving first indication information transmitted from the terminal, wherein the first indication information is used to indicate a duration of a first time window determined by the terminal.

57. The apparatus of claim 54, further comprising:
a second indication information transmitting module, used for transmitting second indication information to the terminal, wherein the second indication information is used to indicate the set of models or functions to be evaluated.

58. The apparatus of claim 54, further comprising:
a third indication information receiving module, used for receiving third indication information transmitted from the terminal, wherein the third indication information is used to indicate the set of models or functions to be evaluated determined by the terminal.

59. The apparatus of claim 55, wherein the receiving module is used for:
receiving, after the first time window ends, a performance evaluation result corresponding to a model or function activated within the first time window; or
receiving, within the first time window, a performance evaluation result corresponding to a model or function activated before the first time window.

60. The apparatus of claim 55, further comprising a result receiving module used for one or more of following:
not receiving, within the first time window, a performance evaluation result corresponding to a model or function activated within the first time window;
not receiving the performance evaluation result within the first time window; or
not configuring or indicating the terminal to transmit the performance evaluation result within the first time window.

61. A processor-readable storage medium, storing a computer program, wherein the computer program is used for causing a processor to perform the method for signal transmission of any of claims 1 to 20.
